# EUROPÄISCHE PATENTSCHRIFT

(11) **EP 2 918 612 B1**
(45) Veröffentlichungstag und Bekanntmachung des Hinweises auf die Patenterteilung: **07.09.2016**
(21) Anmeldenummer: 15158095.8
(22) Anmeldetag: 06.03.2015
(51) Int. Cl.: C08C 19/02, C08F 236/12, C08L 15/00

(54) **AMINOMETHYLGRUPPENHALTIGER HYDRIERTER NITRILKAUTSCHUK, VERFAHREN ZU DESSEN HERSTELLUNG, VULKANISIERBARE ZUSAMMENSETZUNGEN ENTHALTEND AMINOMETHYLGRUPPENHALTIGEN HYDRIERTEN NITRILKAUTSCHUK, VERFAHREN ZU DEREN VULKANISATION UND DADURCH ERHÄLTLICHE VULKANISATE**
HYDROGENATED NITRILE RUBBER CONTAINING AMINOMETHYL GROUPS, METHOD FOR PRODUCING THE SAME, VULCANIZABLE COMPOSITIONS CONTAINING HYDROGENATED NITRILE RUBBER CONTAINING AMINOMETHYL GROUPS, METHOD FOR THEIR VULCANIZATION AND VULCANIZATES OBTAINABLE BY THIS METHOD
CAOUTCHOUC DE NITRILE HYDROGÉNÉ CONTENANT DES GROUPES AMINOMÉTHYLE, LEUR PROCÉDÉ DE FABRICATION, COMPOSITIONS VULCANISABLES CONTENANT DU CAOUTCHOUC DE NITRILE HYDROGÉNÉ CONTENANT DES GROUPES AMINOMÉTHYLE, LEUR PROCÉDÉ DE VULCANISATION ET VULCANISATS AINSI OBTENUS

(30) Priorität: 10.03.2014 EP 14158586; 10.03.2014 EP 14158596
(43) Veröffentlichungstag der Anmeldung: 16.09.2015
(73) Patentinhaber: ARLANXEO Deutschland GmbH, 41540 Dormagen (DE)
(72) Erfinder: Schneider, Rommy, 57439 Attendorn (DE); Obrecht, Werner, 47447 Moers (DE); Früh, Thomas, 42115 Wuppertal (DE); Bischoff, Andreas, 41542 Dormagen (DE); Dreisbach, Claus, 42799 Leichlingen (DE)
(74) Vertreter: Wichmann, Birgid

(56) Entgegenhaltungen:
- WO-A1-95/02008
- US-A- 2 585 583
- US-A- 4 486 549
- US-A- 4 895 994
- US-A1- 2002 058 841
- US-A1- 2003 096 913
- US-A1- 2010 093 931

## Beschreibung

Die vorliegende Erfindung betrifft aminomethylgruppenhaltigen, ganz oder teilweise hydrierten Nitrilkautschuk, Verfahren zu dessen Herstellung, vulkanisierbare Zusammensetzungen enthaltend den aminomethylgruppenhaltigen, ganz oder teilweise hydrierten Nitrilkautschuk und spezielle Vernetzer, Verfahren zur Herstellung von Vulkanisaten daraus, sowie die so erhaltenen Vulkanisate.

Unter Nitrilkautschuken, abgekürzt als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=CDoppelbindungen der einpolymerisierten Dieneinheiten ganz oder teilweise hydriert sind.

Sowohl NBR als auch HNBR nehmen seit vielen Jahren einen festen Platz im Bereich der Spezialelastomere ein. Vulkanisate auf Basis von NBR und HNBR weisen bei guten mechanischen Eigenschaften eine ausgezeichnete Quellbeständigkeit insbesondere gegenüber unpolaren Medien wie Ölen und Kraftstoffen auf. Im Vergleich mit Vulkanisaten auf Basis NBR weisen Vulkanisate auf Basis HNBR eine verbesserte Hitze- und Ozonbeständigkeit sowie verbesserte mechanische Eigenschaften insbesondere eine verbesserte Abriebbeständigkeit auf. Aus diesem Grund finden Vulkanisate aus HNBR breite Verwendung in den verschiedensten Anwendungsgebieten und werden beispielsweise zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus eingesetzt.

Kommerziell erhältlich sind eine Vielzahl unterschiedlicher HNBR-Typen, die sich durch die Monomerenzusammensetzung, insbesondere den Acrylnitrilgehalt, das Molekulargewicht bzw. Mooneyviskosität und den Hydriergrad unterscheiden. Neben den Standardtypen sind auch Spezialtypen kommerziell erhältlich. Zu den HNBR-Spezialtypen gehören ganz oder teilweise hydrierte Nitrilkautschuke, die spezielle Termonomere wie z.B. (Meth)acrylsäure, Acrylate, Alkoxyacrylate oder Halbester enthalten. Zu den HNBR-Spezialtypen gehören auch Typen mit niedriger Mooneyviskosität und hieraus resultierendem verbessertem Verarbeitungsverhalten, die sich insbesondere für die Verarbeitung mittels Spritzguss eignen.

Für den praktischen Einsatz muss HNBR vulkanisiert werden. Während HNBR mit Restdoppelbindungsgehalten von 4 bis 15 % ggf. noch mit Schwefel vulkanisiert werden kann, ist dies bei HNBR mit Restdoppelbindungsgehalt < 4 % und insbesondere bei HNBR mit Restdoppelbindungsgehalt < 1 % nicht mehr möglich, so dass mit Peroxiden vulkanisiert werden muss. Bei einem Vergleich der Vulkanisateigenschaften zeichnet sich peroxidisch vulkanisiertes HNBR gegenüber schwefelvulkanisiertem HNBR durch eine verbesserte Hitzebeständigkeit aus.

Aufgrund gestiegener Anforderungen reicht die Hitzebeständigkeit von peroxidisch vulkanisiertem HNBR in manchen Einsatzgebieten immer noch nicht aus. Es wird vermutet, dass die Hitzebeständigkeit von peroxidisch vernetztem HNBR durch radikalische Nebenreaktionen, Kettenfragmentierung und Rückständen des Vernetzungsmittels beeinträchtigt wird.

Zur Verbesserung der Hitzebeständigkeit von HNBR-Vulkanisaten wird daher eine zumindest teilweise Substitution der peroxidischen Vernetzung durch alternative Vulkanisationsverfahren angestrebt, welche zu stabilen kovalenten Bindungen führen.

### Stand der Technik

In US 4,404,329 wird die Schwefelvulkanisation von teilhydriertem HNBR gelehrt. Es wird gezeigt, dass schwefelvulkanisiertes HNBR im Vergleich mit schwefelvulkansiertem NBR Vorteile in der Alterungs- und Ozonbeständigkeit sowie in der Beständigkeit gegenüber oxydierten und daher sauren Treibstoffen ("sour gas") ohne Einbußen in der Kältebeständigkeit aufweist. Außerdem wird gezeigt, dass schwefelvulkanisiertes HNBR im Vergleich mit peroxidisch vernetztem HNBR Vorteile in der Reißfestigkeit, der Bruchdehnung und der Härte aufweist. In US 4,404,329 findet sich kein Hinweis auf eine alternative Vulkansiation von HNBR ohne Verwendung von Schwefel bzw. von Peroxiden.

In EP 313917 wird gelehrt, dass die Vulkanisation von HNBR mit Doppelbindungsgehalten von vorzugsweise 95 bis 98,5 % durch eine Kombination von Zinkperoxid mit geringen Mengen an Schwefel möglich ist. Es werden Vulkanisate erhalten, die sich durch einen verbesserten Druckverformungsrest (Compression Set), höherer Dichtungsbeständigkeit sowie geringerer Wärmeentwicklung im Dauerschwingversuch (Flexometer) aufweisen. In EP 313917 findet sich kein Hinweis auf eine Verbesserung der Hitzebeständigkeit durch eine alternative Vulkansiation von HNBR ohne Schwefel bzw. ohne Peroxide.

In EP 144805 wird die peroxidische Vulkanisation von HNBR gelehrt. Es werden überragende Ozonbeständigkeiten gefunden, wenn bei der Vulkanisation des hydrierten Nitrilkautschuks mit Restdoppelbindungsgehalten von 4 bis 15 % Peroxide eingesetzt werden, deren Halbwertszeit bei 170 °C in Benzol > 2 Minuten und in LDPE > 8 Minuten beträgt. In EP 144805 findet sich kein Hinweis auf eine Verbesserung der Heißluftbeständigkeit durch eine alternative Vulkansiation von HNBR ohne Schwefel bzw. ohne Peroxide.

In US 5,013,783 werden HNBR-Vulkanisate mit verbessertem Verhalten bei der Heißluftalterung beschrieben. Die verbesserten Eigenschaften werden sowohl bei Vulkanisation mit Peroxiden als auch bei Vulkanisation mit Schwefel erreicht, indem Natriumaluminiumsilikate als Füllstoff verwendet werden. In US 5,013,783 werden außer der Vulkanisation mit Schwefel und Peroxiden alternative Vernetzungssysteme wie die Urethanvernetzung, die Metalloxidvernetzung und die Vulkanisation mit Harzen sowie Kombinationen derselben genannt. Es fehlen allerdings Hinweise auf Vulkanistionsmethoden, für die das HNBR bestimmte funktionelle Gruppen wie Aminomethylgruppen aufweisen muss.

In CA 2404295 wird die Herstellung von carboxyliertem hydriertem Nitrilkautschuk (XHNBR) durch Hydrierung von carboxyliertem Nitrilkautschuk (XNBR) beschrieben. Die Vulkanisation wird mit organischen Peroxiden bzw. mit Zinkperoxid durchgeführt. Bei den mechanischen Eigenschaften weist XHNBR im Vergleich mit HNBR und XNBR Vorteile auf. In CA 2404295 schlägt keine alternativen Vulkanisationsmethoden vor.

Nicht peroxidische Vulkanisationsmethoden, die z.B. bei carboxylierten Kautschuken Anwendung finden, sind beschrieben in: H. P. Brown, Rubber Chem. Technol. 30 (1957) 1347-1386 "Carboxylic Elastomers**".** Darin ist zwar die Vulkanisation von carboxylathaltigen Polymeren mit Diaminen allgemein dargelegt, es finden sich jedoch keine Hinweise auf alternative Vulkanisationssysteme.

Die nicht peroxidische Vernetzung eines Polymers mit eingebauten Säurehalbestern mit dem Handelsnamen Vamac® (Ehylen/Acrylat-Copolymere der Fa. Du Pont) mittels Diaminen ist etabliert. Diese Technologie ist Gegenstand von Patentschriften (US 3,904,588**,** US 3,883,472**,** US 4,026,851**,** EP 0093439**)** und von Publikationen **(**T. Dobel, J. R. Harrell "New Developments in Ethylene/Acrylic Elastomers" ACS, Rubber Div. Detroit, Michigan, Oct. 8-11, 1991**,** E. N. Scheer, F. R. Wolf, "Elastomers for Speciality Applications" ACS Rubber Div. Educational Symposium, Los Angeles, Cal. April 23-26, 1985**,** Vamac®, Du Pont Technical Information, Rev. 2, January 2008 "A Review of Fast-Cure Systems for Vamac® Elastomers**, sowie** H. J. Bragger, L. C. Muschiatti, "Vamac® Ethylene Acrylic Elastomers for Demanding Automotive Applications" ACS, Rubber Division Orlando, FL, Sept. 21-24, 1999**).**

Die Halbestertechnologie wurde von Zeon auf HNBR übertragen, und ist Gegenstand folgender Patentanmeldungen: WO 2001-14469 bzw. EP 1234851**,** WO 2007/049651**,** WO 2007/072900**,** WO 2007/119848**,** WO 2009/051102.

In den genannten Zeon-Patentameldungen erfolgt die Herstellung von halbesterhaltigem HNBR im ersten Schritt durch Copolymerisation von Butadien und Acrylnitril mit Fumar- bzw. Maleinsäurehalbestern. Bei der anschließenden Hydrierung muss sichergestellt werden, dass die Halbesterfunktion erhalten bleibt. Die Vulkanisation des halbesterhaltigen hydrierten Nitrilkautschuks erfolgt mit Polyaminen. Es gibt es keinen Hinweis auf alternative Vernetzungssysteme, insbesondere unter Verwendung aminomethylgruppenhaltiger Polymere und/oder multifunktioneller Säurederivate als Vernetzer.

Die obigen Verfahren, bei denen in die Polymerhauptkette des vollhydrierten Nitrilkautschuks Halbesterfunktionen (Maleinsäurehalbester bzw. Fumarsäurehalbester) eingebaut werden, welche anschließend mit geeigneten Diaminen wie Hexamethylendiamin, aromatischen Diaminen und hiervon abgeleiteten Carbamaten vulkanisiert werden, weisen jedoch den Nachteil einer geringen Scorchbeständigkeit und damit einer geringen Verarbeitungssicherheit der Kautschukmischungen auf.

Für den alternativen Weg der Vernetzung von aminofunktionalisierten hydrierten Nitrilkautschuken waren allerdings geeignete aminofunktionalisierte, hydrierte Nitrilkautschuke bislang nicht verfügbar. Theoretisch sind diese herstellbar durch Reduktion eines Teils der Nitrilgruppen von ganz oder teilweise hydriertem Nitrilkautschuk. Allerdings ist die Hydrierung von Nitrilen zur Herstellung der entsprechenden Amine nur im niedermolekularen Bereich ausgiebig erforscht, wie u.a. in Homogeneus and Heterogeneous Hydrogenation of Nitriles in a Liquid Phase: Chemical, Mechanistic and Catalytic Aspects" C. de Bellefon, P. Foulloux, Catal. Rev. -Sci. Eng. (1994) 36(3), 459-506 beschrieben. In diesem Übersichtsartikel fehlen Hinweise auf die Übertragbarkeit der beschriebenen Hydrierverfahren auf nitrilhaltige Polymere im Allgemeinen und auf Nitrilkautschuk im Speziellen.

Die Nitrilgruppen-Hydrierung hochmolekularer Verbindungen ist weit weniger erforscht. Wie u.a. in Journal of Applied Polymer Science (2001) 79, 1618-1626 beschrieben, führt die Nitrilgruppenhydrierung bei der Hydrierung von NBR zu einem Molmassenaufbau und einer Vergelung des Polymers. In dieser Publikation gibt es keinen Hinweis, mit welchen Katalysatoren und unter welchen Rahmenbedingungen die Nitrilgruppenhydrierung von NBR durchzuführen ist, so dass kein Molmassenaufbau und keine Vergelung des Polymeren eintritt.

In der Dissertation "Aspekte der Hydrierung von Acrylnitril-Butadien-Copolymeren", von P. Göppert (TU München 2012) Seite 86 bis 90 wurden unterschiedliche heterogene Katalysatoren und Reaktionsbedingungen zur Hydrierung von Nitrilgruppen in vollhydriertem Nitrilkautschuk untersucht. Die Auswahl der Katalysatoren und der Reaktionsbedingungen erfolgte in Anlehnung an bekannte Synthesen von niedermolekularen Aminen durch Reduktion der entsprechenden Nitrile. Dabei wurden insbesondere unter Verwendung von Raney-Nickel die Reaktionsbedingungen in einem weiten Bereich variiert, beispielsweise der Druck von 1-160 bar und die Temperatur von 90-160 °C. Mit Raney-Nickel wurden auch Hydrierungen in THF mit Zusätzen wie Ammoniak, Natronlauge und Hydrazinmonoformiat durchgeführt. Die Charakterisierung der Reaktionsprodukte erfolgte mit NMR, AT-IR und GPC. Allerdings konnte mit keinem der Katalysatoren und Zusätzen eine Nitrilgruppenhydrierung erzielt werden. Auch wurde in keinem Fall eine Erhöhung der Molmasse beobachtet.

In US 6,121,188 wurden Festbett Raney-Metallkatalysatoren, die sowohl für die Hydrierung von C=C als auch von CN-Gruppen diverser Polymere u.a. auch von Acrylnitril-Butadien Copolymeren geeignet sind, beschrieben. Als geeignetes Molekulargewicht wird in der Beschreibung des Patents ein Bereich von Mw 500 bis 500.000 g/mol angegeben, in den Beispielen wurden allerdings nur Acrylnitril-Butadien Copolymere mit Mw = 3000 eingesetzt. Weiterhin ist angegeben, dass mit hoher Selektivität zuerst die CN-Gruppen hydriert und danach die C=C Bindungen hydriert werden. Als Reaktionsbedingungen sind ein H₂-Druck über 20 bar, bevorzugt zwischen 50 und 400 bar und eine Temperatur von bevorzugt 30 bis 250 °C angegeben, wobei alle Beispiele bei 180 °C und 250 bar durchgeführt wurden. In US 6,121,188 gibt es keine Beispiele, die belegen, dass die angewandten Hydrierbedingungen auch bei Butadien/Acrylnitril-Copolymeren mit Molmassen Mw von 20.000 bis 500.000 g/mol sowie bei Butadien/Acrylnitrilcopolymeren mit Acrylnitrilgehalten im Bereich von 20 bis 50 Gew.-% erfolgreich angewandt werden können.

In US 2,456,428 wird die Synthese von Polyallylaminen durch Hydrierung von CN-Gruppen von Polyacrylnitril beschrieben, die mit jedwedem bekannten Hydrierunsgkatalysator funktionieren soll. Allerdings gibt es weder Äußerung zum Molmassenbereich, in dem diese Hydrierung funktioniert noch Beispiele in denen durch Angabe von konkreten Daten (z.B. eingesetzte Reagentien, Reaktionsbedingungen, Umsatz oder Selektivität) gezeigt wurde, dass die Erfindung ausführbar ist.

In der Literatur ist bisher kein aminomethylgruppenhaltiger HNBR mit einem Gehalt an α,β-ungesättigten Nitrile, vorzugsweise Acrylnitril von 10 bis 50 Gew.-%, Molmassen Mw von 50.000 bis 500.000 g/mol bzw. Mooneyviskositäten (ML1+4/100°C) von 10 bis 150 ME und Hydriergraden von 80 bis 100 % beschrieben, insbesondere keiner mit Aminomethylgruppengehalten von 0,01 Gew.-% bis 20 Gew.-%. Auch war es aus dem Stand der Technik nicht bekannt, dabei aminohaltigen HNBR mit einem Gelgehalt von weniger als 10 %, insbesondere weniger als 5 % zu erhalten. Neben fehlenden Hinweisen zur Herstellung eines derartigen aminomethylgruppenhaltigen Nitrilkautschuks durch Hydrierung der Doppelbindungen von HNBR existiert auch keine Lehre zur Vulkanisation von aminomethylgruppenhaltigem HNBR mit Verbindungen, die Carboxylgruppen und Carboxylgruppenderivate enthalten.

Weiterhin lehrt die einschlägige Fachliteratur dass Schwefelverbindungen starke Katalysatorgifte darstellen (siehe z.B. Ullmann's Encyclopedia of Industrial Chemistry, im Abschnitt "Heterogeneous Catalysis and Solid Catalysts" unter Ziffer 7.3.1 Different Types of Deactivation, Seite 80**: "Elements of class 1 and their compounds, for example, H₂S, mercaptans, ... are very strong poisons for metallic catalysts, especially for those containing Ni, Co, Cu, Fe, and noble metals".)**

### Aufgabe der Erfindung

Die Aufgabe der vorliegenden Erfindung bestand in der Bereitstellung von aminomethylgruppenhaltigem hydrierten Nitrilkautschuk mit einem Gehalt an α,β-ungesättigten Nitrilen, vorzugsweise Acrylnitril von 10 - 50 Gew. %, vorzugsweise 18 - 48 Gew.-%, besonders bevorzugt 22 - 46 Gew.-% und ganz besonders bevorzugt 26 - 44 Gew.-% jeweils bezogen auf den aminomethylgruppenhaltigen hydrierten Nitrilkautschuk und einer Mooneyviskosität (ML 1+4/100°C) von 10 bis 150 ME, vorzugsweise 20 bis 130 ME, besonders bevorzugt 39 bis 100 ME, sowie einem Verfahren zur Herstellung des aminomethylgruppenhaltigen hydrierten Nitrilkautschuks durch Nitrilgruppen-Hydrierung von ganz- oder teilweise hydriertem Nitrilkautschuk.

Bevorzugt sollten aminomethylgruppenhaltigem hydrierten Nitrilkautschuk mit geringem Gelgehalt erhalten werden. Weiterhin war eine geringe Zunahme der Mooneyviskosität bei der Hydrierung gewünscht.

Die erfindungsgemäßen aminomethylgruppenhaltigen hydrierten Nitrilkautschuke sollten vernetzbar sein durch auf Nitrilkautschuk basierenden Zusammensetzungen, welche durch mindestens einen Vernetzer, bevorzugt mindestens einen Vernetzer enthaltend ein, zwei oder mehr Gruppen ausgewählt aus Carbonsäureanhydridgruppen, Carbonsäuregruppen und Carbonsäureestergruppen. vulkanisierbar sind und zu Vulkanisaten mit guten physikalischen Eigenschaften führen, sowie die Nachteile der Zusammensetzungen gemäß dem Stand der Technik vermeiden.

Die Zusammensetzungen sollten vorzugsweise für eine gute Verarbeitbarkeit eine möglichst hohe Scorchbeständigkeit aufweisen, und im vulkanisierten Zustand eine gute Beständigkeit gegen Heißluftalterung aufweisen.

Die Aufgabe wird gelöst durch
a) ein Verfahren zur Herstellung von aminomethylgruppenhaltigem hydrierten Nitrilkautschuk mit einem Gehalt an a,β-ungesättigten Nitrilen, vorzugsweise Acrylnitril von 10 - 50 Gew.-%, vorzugsweise 18 - 48 Gew.-%, besonders bevorzugt 22 - 46 Gew.-% und ganz besonders bevorzugt 26 - 44 Gew.% jeweils bezogen auf den aminomethylgruppenhaltigen hydrierten Nitrilkautschuk und einer Mooneyviskosität (ML 1+4/100°C) von 10 bis 150 ME, vorzugsweise 20 bis 130 ME, besonders bevorzugt 39 bis 100 ME, durch Inkontaktbringen von ganz oder teilweise hydriertem Nitrilkautschuk mit Wasserstoff in Gegenwart von Raney-Cobalt, wobei
   (i) die Kontaktierung in Gegenwart von 0,01 bis 5 Gew.-%, ein oder mehrerer sulfidischer Additive, vorzugsweise ein oder mehrerer aliphatischer Sulfide, besonders bevorzugt Alkylsulfide und ganz besonders bevorzugt von Dodecylsulfid erfolgt, und/oder
   (ii) das verwendete Raney-Cobalt vor dem Inkontaktbringen durch Vereinigen mit einem getrockneten Lösungsmittel und anschließender Abtrennung von Raney-Cobalt getrocknet wurde
   und
b) aminomethylgruppenhaltigem hydrierten Nitrilkautschuk mit einem Gehalt an α,β-ungesättigten Nitrilen, vorzugsweise Acrylnitril von 10 - 50 Gew. %, vorzugsweise 18 - 48 Gew.-%, besonders bevorzugt 22 - 46 Gew.-% und ganz besonders bevorzugt 26 - 44 Gew.-% jeweils bezogen auf den aminomethylgruppenhaltigen hydrierten Nitrilkautschuk und einer Mooneyviskosität (ML 1+4/100°C) von 10 bis 150 ME, vorzugsweise 20 bis 130 ME, besonders bevorzugt 39 bis 100 ME,
und eine vulkanisierbare Zusammensetzung enthaltend
(i) mindestens einen aminomethylgruppenhaltigem ganz oder teilweise hydrierten Nitrilkautschuk mit einem Gehalt an α,β-ungesättigten Nitrilen, vorzugsweise Acrylnitril von 10 - 50 Gew. %, vorzugsweise 18 - 48 Gew.-%, besonders bevorzugt 22 - 46 Gew.-% und ganz besonders bevorzugt 26 - 44 Gew.-% jeweils bezogen auf den aminomethylgruppenhaltigen hydrierten Nitrilkautschuk und einer Mooneyviskosität (ML 1+4/100°C) von 10 bis 150 ME, vorzugsweise 20 bis 130 ME, besonders bevorzugt 39 bis 100 ME, sowie
(ii) mindestens einen Vernetzer, bevorzugt mindestens einen Vernetzer enthaltend ein, zwei oder mehr Gruppen ausgewählt aus Carbonsäureanhydridgruppen, Carbonsäuregruppen und Carbonsäureestergruppen, besonders bevorzugt mindestens einen Vernetzer enthaltend ein, zwei oder mehr Carbonsäureanhydridgruppen.

Überraschend wurde gefunden, dass sich aus ganz oder teilweise hydriertem Nitrilkautschuk, der Wiederholungseinheiten abgeleitet von mindestens einem konjugierten Dien, mindestens einem α,β-ungesättigten Nitril und gegebenenfalls einem oder mehreren weiteren copolymerisierbaren Monomeren enthält und Aminomethylgruppen aufweist, in Kombination mit mindestens einem Vernetzer, bevorzugt mindestens einem Vernetzer enthaltend ein, zwei oder mehr Gruppen ausgewählt aus Carbonsäureanhydridgruppen, Carbonsäuregruppen und Carbonsäureestergruppen, besonders bevorzugt mindestens einen Vernetzer enthaltend ein, zwei oder mehr Carbonsäureanhydridgruppen, stabile Netzwerke aufbauen lassen.

Bei den Aminomethylgruppen gemäß der vorliegenden Erfindung handelt es sich vorzugsweise um primäre Aminomethylgruppen (CH₂-NH₂) welche direkt oder über lineare oder verzweigte C₁-C₁₀, vorzugsweise C₁-C₆, besonders bevorzugt C₁-C₃-Alkylgruppen an die Polymerkette gebunden sind. In einer bevorzugten Ausführungsform handelt es sich um direkt an die Polymerkette gebundene CH₂-NH₂-Gruppen erhältlich z.B. durch Reduktion von Wiederholungseinheiten welche von Acrylnitril abgeleitet sind. Der Gehalt an Aminomethylgruppen ist bezogen auf die Gesamtmasse des aminomethylgruppenhaltigen hydrierten Nitrilkautschuks. Die Begriffe aminofunktionalisierter hydrierter Nitrilkautschuk und aminomethylgruppenhaltiger hydrierter Nitrilkautschuk werden in dieser Anmeldung synonym verwendet.

Der Anteil an Aminomethylgruppen beträgt vorzugsweise 0,01 bis 20 Gew.-% besonders bevorzugt von 0,1 bis 15 Gew.-%, weiter bevorzugt 0,5 bis 10 Gew.-% und ganz besonders bevorzugt 1 bis 5 Gew.-% bezogen auf den gesamten Nitrilkautschuk.

### Vernetzer (ii)

Als Vernetzer (ii) kommen prinzipiell alle Carbonsäuren, Carbonsäureester, Carbonsäurehalbester und Carbonsäureanhydride in Frage, welche mit mindestens 2 Aminomethylgruppen des Nitrilkautschuks reagieren können. Vorzugsweise handelt es sich um Carbonsäureanhydride der folgenden Strukturformel, wobei R einen organischen Rest, vorzugsweise einen substituierten oder unsubstituierten aliphatischen oder aromatischen Rest, besonders bevorzugt einen aliphatischen Rest mit 2 bis 6 Kohlenstoffatomen oder einen aromatischen Rest mit 6 Kohlenstoffatomen und X einen substituierten oder unsubstituierten aliphatischen, Heteroatome tragenden aliphatischen, aromatischen, heteroaromatischen, oder aliphatisch-aromatischen divalenten Rest mit vorzugsweise 2 bis 10 Kohlenstoffatomen darstellt.

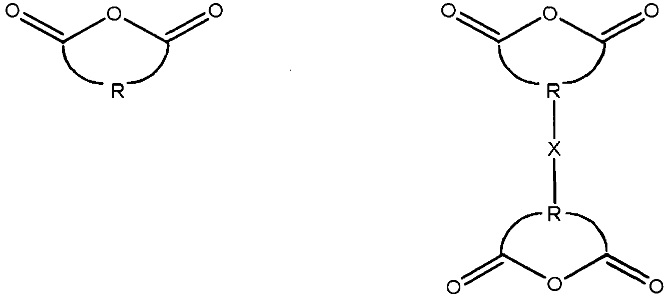

Bevorzugt handelt es sich dabei um aliphatische und/oder aromatische Carbonsäureanhydride, welche formal betrachtet durch Dehydratisierung von Verbindungen mit 2 oder mehr Carboxylfunktionen erhältlich sind, wobei 1, 2 oder mehrere Anhydridgruppen der Struktur -C(O)-O-C(O)- im Vernetzer enthalten sind.

Erfindungsgemäß können beispielsweise folgende Vernetzer eingesetzt werden: Maleinsäureanhydrid, Itaconsäureanhydrid, Bernsteinsäureanhydrid, Mellitsäuretrianhydrid, Pyromellitsäuredianhydrid, 4,4'-(4,4'-Isopropylidendiphenoxy)bis(phthalsäureanhydrid), 5-Aminoisatosäureanhydrid, S-Acetylmercaptobernsteinsäureanhydrid, 4,4'-Hexafluoro-isopropylidene)diphthalsäureanhydrid, 3,3',4,4'-Biphenyltetracarbonsäuredianhydrid, 4,4'-Oxydiphthalsäureanhydrid, Benzophenone-3,3',4,4'-tetracarbonsäuredianhydrid, 1,4,5,8-Naphthalenetetracarbonsäuredianhydrid, Perylene-3,4,9,10-tetracarbonsäuredianhydrid 97 %, Bicyclo[2.2.2]oct-7-ene-2,3,5,6-tetracarbonsäuredianhydrid 99 %, aber auch Oligomere und Polymere, die Maleinsäureanhydrid enthalten wie z.B. Isobutylen/Maleinsäureanhydrid-Copolymere etc. finden Verwendung. Bevorzugt werden Maleinsäure-anhydrid, Itaconsäureanhydrid, Bernsteinsäureanhydrid, Pyromellitsäuredianhydrid, Mellitsäuretrianhydrid 4,4'-(4,4'-Isopropylidendiphenoxy)bis(phthalsäureanhydrid), 5-Aminoisatosäureanhydrid, S-Acetylmercaptobernstein-säureanhydrid und ganz besonders bevorzugt einen Vernetzer aus der Gruppe bestehend aus Maleinsäureanhydrid, Mellitsäuretrianhydrid, Itaconsäureanhydrid Bernsteinsäureanhydrid und Pyromellitsäuredianhydrid eingesetzt.

Bevorzugt wird der Vernetzer in einer solchen Menge eingesetzt, dass das Molverhältnis von Aminomethylgruppen des hydrierten Nitrilkautschuks zu Anhydridgruppen des Vernetzers von 3:1 bis 1:3, vorzugsweise von 2:1 bis 1:2, besonders bevorzugt von 1,5:1 bis 1:1,5 und ganz besonders bevorzugt von 1,2:1 bis 1:1.

Bei der Vulkanisation des aminomethylgruppenhaltigen, ganz oder teilweise hydrierten Nitrilkautschuks ist es möglich, andere Vernetzer zu verwenden.

Als andere Vernetzer kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy)buten, 4,4-di-tert.Butylperoxynonylvalerat, Dicumylperoxid, 2,5-Dimethyl-2,5-di(tbutylperoxy) hexan, tert-Butylcumylperoxid, 1,3-Bis(t-butylperoxyisopropyl)benzol, Di-tbutylperoxid und 2,5-Dimethyl-2,5-di(t-butylperoxy)-hexyn-3.

Als andere Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2- 20 Morpholino-dithiobenzothiazol (MBSS), Caprolactamdisulfid, Dipentamethylenthiuramtetrasulfid (DPTT), und Tetramethylthiuramdisulfid (TMTD) in Frage.

Wie die erfindungsgemäßen Beispiele zeigen kann dabei die eingesetzte Menge anderer Vernetzer wie z.B. Schwefel, Schwefelspendern und Peroxiden und anderer Vernetzungsbeschleunigern durch die Verwendung von Vernetzern enthaltend ein, zwei oder mehr Gruppen ausgewählt aus Carbonsäureanhydridgruppen, Carbonsäuregruppen und Carbonsäureestergruppen, drastisch reduziert werden, bzw. es kann sogar vollkommen darauf verzichtet werden.

Der Anteil an anderen Vernetzern beträgt vorzugsweise maximal 2 Gew.-Teile, besonders bevorzugt maximal 1,0 Gew.-Teil und ganz besonders besonders bevorzugt maximal 0,5 Gew.-Teile, jeweils bezogen auf 100 Gew.-Teile des aminomethylgruppenhaltigen, ganz oder teilweise hydrierten Nitrilkautschuks (i)

In einer besonders bevorzugten Ausführungsform werden Di- oder Polyanhydride von aromatischen Polycarbonsäuren wie Pyromellitsäuredianhydrid oder Mellinsäuretrianhydrid eingesetzt, welche bei der Vernetzung zur Bildung von Imidbrücken befähigt sind und damit ganz besonders stabile Vulkanisate erzeugen können. Diese Bildung von Imidbrücken lässt durch IR-Spektroskopie verfolgen, da hierbei eine starke Absorptionsbande bei 1855 +/-10 cm⁻¹, vorzugsweise 1855 +/-5 cm⁻¹ auftritt. Die Absorptionsbande besitzt typischerweise eine Intensität von mindestens 10 %, vorzugsweise mindestens 20 %, besonders bevorzugt mindestens 30 % der stärksten Absorptionsbande des Vulkanisats. Solche mittels Imidbrücken vernetzte hydrierte Nitrilkautschuke sind bisher nicht bekannt. Die erfindungsgemäßen aminomethylgruppenhaltigen Nitrilkautschuke eignen sich zur Herstellung von Vulkanisaten. Ein weiterer Gegenstand der vorliegenden Erfindung sind daher Vulkanisate von ganz oder teilweise hydriertem Nitrilkautschuk, der Wiederholungseinheiten abgeleitet von mindestens einem konjugierten Dien, mindestens einem α,β-ungesättigten Nitril und gegebenenfalls einem oder mehreren weiteren copolymerisierbaren Monomeren enthält, wobei die Vulkanisate eine Absorptionsbande im ATR-(Diamant) Infrarotspektrum bei 1855 +/-10 cm⁻¹, vorzugsweise 1855 +/-5 cm⁻¹ mit einer Intensität von mindestens 10 %, vorzugsweise mindestens 20 %, besonders bevorzugt mindestens 30 % der stärksten Absorptionsbande des Vernetzungsprodukts zeigen.

In einer weiteren bevorzugten Ausführungsform ist der Vernetzer ein Polymer, das an den Seitenketten und/oder als Endgruppen mindestens zwei funktionale Gruppen, ausgewählt aus Carbonsäuren, Carbonsäureester, Carbonsäurehalbester und Carbonsäureanhydride enthält, welche mit Aminomethylgruppen des Nitrilkautschuks reagieren können. Bevorzugt werden als solche Vernetzer sogenannte "carboxylierte", d.h. Carbonsäure-oder Carbonsäureester-Seitengruppen tragende Nitrilkautschuke (XNBR) bzw. deren hydrierte Variante (HXNBR) eingesetzt. Die Herstellung solcher carboxylierter Nitrilkautschuke und hydrierter carboxylierter Nitrilkautschuke ist beispielsweise in EP0 933 381 A1, US 5,157,083 A und in CA-2,304,501 beschrieben. Diese können auch durch literaturbekannte Metathese-Reaktion einem Molekulargewichtsabbau unterzogen werden, und in besonders niederviskoser Form eingesetzt werden.

Als XNBR bzw. HXNBR geeignet sind beispielsweise unhydrierte bzw. hydrierte carboxylierte Nitrilkautschuke auf der Basis eines XNBR aus Butadien und Acrylnitril und Acrylsäure und/oder Methacrylsäure und/oder Fumarsäure und/oder Maleinsäure und/oder den Methyl-, Ethyl-, Propyl-, isopropyl-, n-Butyl, iso-Butyl-, n-Hexyl- und/oder 2-Ethylhexyl-Halbestern von Fumarsäure und/oder Maleinsäure und/oder den Methyl-, Ethyl-, Propyl-, Isopropyl-,n-Butyl-, iso-Butyl-, n-Hexyl- und/oder 2-Ethylhexyl-Estern von Acrylsäure und/oder Methacrylsäure.

Als HXNBR geeignet sind ferner beispielsweise hydrierte carboxylierte Nitrilkautschuke auf der Basis eines XNBR aus Butadien und Acrylnitril und einem Carboxyl-Gruppen enthaltenden Monomer, inbesondere Fumarsäure, Maleinsäure, Acrylsäure oder Methacrylsäure.

Als HXNBR geeignet sind ferner beispielsweise hydrierte carboxylierte Nitrilkautschuke auf der Basis eines XNBR aus Butadien und Acrylnitril und einem Carboxyl-Gruppen enthaltenden Monomer, inbesondere Fumarsäure, Maleinsäure, Acrylsäure oder Methacrylsäure, und einem Carboxylat-Gruppen enthaltenden Monomer, inbesondere dem Methyl-, Ethyl-, Propyl-, Isopropyl-, n-Butyl, iso-Butyl-, n-Hexyl- oder 2-Ethylhexyl-Halbester von Fumarsäure oder Maleinsäure oder dem Methyl-, Ethyl-, Propyl-, Isopropyl-, n-Butyl-, iso-Butyl-, n-Hexyl- oder 2-Ethylhexyl-Ester von Acrylsäure oder Methacrylsäure.

Weitere geeignete polymere Vernetzer enthalten Anhydridgruppen welche durch Copolymerisation mit oder Aufpfropfen (Modifizieren) von Maleinsäureanhydrid (MAH) eingeführt wurden. Beispiele für entsprechende Polymere sind PE-MAH, HDPE-MAH, PP-MAH, Styrol-Maleinsäureanhydrid Copolymer, Maleinsäureanhydrid modifiziertes Ethylen-Vinylacetat Copolymer, Maleinsäure-Alkyl(meth)acrylat Copolymere,

Bevorzugt werden bei der vorliegenden Erfindung Carbonsäuregruppen enthaltende Vernetzer, insbesondere polymere Carbonsäuregruppen enthaltende Vernetzer mit einem Kupplungsreagenz eingesetzt um die Reaktivität zu erhöhen. Geeignete Kupplungsreagenzien für die Amidsynthese aus Carbonsäuren und Aminen sind dem Fachmann unter anderem aus der Festphasen-Peptidsynthese bekannt und beispielsweise in Montalbetti et al., Tetrahedron, 61, (2005), 10827-10852 beschrieben (darin als Aktivierungsreagenz bezeichnet). Exemplarisch seinen als Kupplungsreagenzien DCC, DCU, EDCI, CIP, DIC und Die Kupplungsreagenzien können zur Vorbehandlung (Aktivierung) des Vernetzers verwendet werden und/oder zusammen mit dem Vernetzer oder separat der Kautschukmischung beigemengt werden.

### Vernetzungsbeschleuniger

Die erfindungsgemäßen vulkanisierbaren Zusammensetzungen können ggf. Vernetzungsbeschleuniger wie z.B. Tolylguanidin enthalten. In einer bevorzugten Ausführungsform enthält die vulkanisierbare Zusammensetzung aber weniger als 2 Gew.-Teile, besonders bevorzugt weniger als 1 Gew.-Teil und ganz besonders bevorzugt 0 Gew.-Teile Vernetzungsbeschleuniger, jeweils bezogen auf 100 Gew.-Teile des aminomethylgruppenhaltigen, ganz oder teilweise hydrierten Nitrilkautschuks (i).

Die vulkanisierbare Zusammensetzung kann zusätzlich zu den oben erwähnten Inhaltsstoffen die für Kautschuke üblichen Zusatzstoffe wie Verstärkungsmittel, Füllstoffe, insbesondere Ruße, Silica, Calciumcarbonat und Natriumaluminiumsilikate, Alterungsschutzmittel auf Basis sterisch gehinderter Phenole oder Phenylendiame wie Naugard 445, Lichtstabilisatoren, Scorch-Verzögerer, Weichmacher wie TOTM, Verarbeitungshilfsmittel wie Vanfre VAM, Schmierstoffe, Gleitmittel, Flammschutzmittel, Antistatikum, Farbstoffe, und Vernetzungsverzögerer enthalten.

Die vulkanisierbare Zusammensetzung kann zusätzlich zu den oben erwähnten Inhaltsstoffen noch weitere Elastomere und/oder Harze enthalten, sofern diese nicht die Vernetzung verhindern. Hierfür können beispielsweise Olefinelastomere, Styrolelastomere, Vinylchloridelastomere, Polyesterelastomere, Polyamidelastomere, Polyurethanelastomere, Polysiloxanelastomere, natürliche Kautschuke, Polybutadienkautschuke, Polyisoprenkautschuke, Styrol-Butadien-Kautschuke, Acrylnitril-Butadien-Kautschuke oder Chloroprenkautschuke angeführt werden.

Die vulkanisierbare Zusammensetzung enthält üblicherweise
(i) mindestens einen ganz oder teilweise hydriertem Nitrilkautschuk, der Wiederholungseinheiten abgeleitet von mindestens einem konjugierten Dien, mindestens einem α,β-ungesättigten Nitril und gegebenenfalls einem oder mehreren weiteren copolymerisierbaren Monomeren enthält und Aminomethylgruppen aufweist, und
(ii) 0,01 bis 30 Gew.-Teile, bevorzugt 0,05 bis 25 Gew.-Teile, besonders bevorzugt 0,1 bis 15 Gew.-Teile und insbesondere 0,2 bis 10 Gew.-Teile, jeweils auf 100 Gew.Teile des Nitrilkautschuks (i) bezogen, mindestens eines Vernetzers, bevorzugt mindestens eines Vernetzers enthaltend ein, zwei oder mehr Gruppen ausgewählt aus Carbonsäureanhydridgruppen, Carbonsäuregruppen und Carbonsäureestergruppen, besonders bevorzugt mindestens einen Vernetzer enthaltend ein, zwei oder mehr Carbonsäureanhydridgruppen

Erfindungsgemäß werden die Vernetzer (ii) dem aminomethylgruppenhaltigen, ganz oder teilweise hydrierten Nitrilkautschuk nach dessen Herstellung zugesetzt. Es handelt sich damit nicht um Verbindungen, die bei der Herstellung des ganz oder teilweise hydrierten Nitrilkautschuks oder bei dessen Compoundierung frei werden oder bereits vorliegen, sondern um separat zudosierte Stoffe. Hierdurch wird eine Teilvernetzung bzw. Teilvergelung bereits bei der Herstellung des aminomethylgruppenhaltigen, ganz oder teilweise hydrierten Nitrilkautschuks vermieden.

### Aminomethylgruppenhaltiger ganz oder teilweise hydrierter Nitrilkautschuk (i):

Als aminomethylgruppenhaltige, ganz oder teilweise hydrierte Nitrilkautschuke (i) können in den erfindungsgemäßen vulkanisierbaren Zusammensetzungen beliebige geeignete, ganz oder teilweise hydrierte Nitrilkautschuke eingesetzt werden, die Wiederholungseinheiten abgeleitet von mindestens einem konjugierten Dien, mindestens einem α,β-ungesättigten Nitril und gegebenenfalls einem oder mehreren weiteren copolymerisierbaren Monomeren, und Aminomethylgruppen aufweisen.

In einer bevorzugten Ausführungsform werden die Aminomethylgruppen durch Reduktion der Nitrilgruppen des ganz oder teilweise hydrierten Nitrilkautschuks erhalten.

Bevorzugt werden in der erfindungsgemäßen vulkanisierbaren Zusammensetzung solche aminomethylgruppenhaltigen, ganz oder teilweise hydrierten Nitrilkautschuke eingesetzt, die Wiederholungseinheiten mindestens eines Nitrils, mindestens eines konjugierten Diens, mindestens eines aminomethylgruppenhaltigen Monomers und optional eines oder mehrerer weiterer copolymerisierbarer Monomere, jedoch keiner nicht-konjugierten cyclischen Polyene, enthalten.

Das konjugierte Dien im aminomethylgruppenhaltigen Nitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Als weitere copolymerisierbare Monomere können - falls gewünscht - beispielsweise aromatische Vinylmonomere, bevorzugt Styrol, α-Methylstyrol und Vinylpyridin, fluorhaltige Vinylmonomere, bevorzugt Fluorethylvinylether, Fluorpropylvinylether, o-Fiuormethylstyrol, Vinylpentafluorbenzoat, Difluoroethylen und Tetrafluoroethylen, oder auch copolymerisierbare Antiageing Monomere, bevorzugt N-(4-anilinophenyl)acrylamid, N-(4-anilinophenyl)methacrylamid, N-(4-anilinphenyl)zimtsäureamid, N-(4-anilinophenyl) crotonsäureamid, N-phenyl-4-(3-vinylbenzyloxy)anilin und N-phenyl-4-(4-vinylbenzyloxy)anilin eingesetzt werden sowie nicht-konjugierte Diene, wie 4-Cyanocyclohexen und 4-Vinylcyclohexen, oder auch Alkine, wie 1- oder 2-Butin.

Weiterhin können als copolymerisierbare Termonomere hydroxylgruppenhaltige Monomere eingesetzt werden, vorzugsweise Hydroxyalkyl(meth)acrylate. Es können aber auch entsprechend substituierte (Meth)acrylamine eingesetzt werden.

Beispiele geeigneter Hydroxyalkylacrylatmonomere sind 2-Hydroxyethyl(meth)acrylat, 2-Hydroxypropyl(meth)acrylat, 3-Hydroxypropyl(meth)acrylat, 3-Chlor-2-hydroxypropyl-(meth)acrylat, 3-Phenoxy-2-hydroxypropyl(meth)acrylat, Glycerinmono(meth)acrylat, Hydroxybutyl(meth)acrylat, 3-Chlor-2-hydroxypropyl(meth)acrylat, Hydroxyhexyl(meth)-acrylat, Hydroxyoctyl(meth)acrylat, Hydroxymethyl(meth)acrylamid, 2-Hydroxypropyl-(meth)acrylat, 3-Hydroxypropyl(meth)acrylamid, Di-(Ethylenglykol)itaconat, Di-(Propylen-glykol)itaconat, Bis(2-Hydroxypropyl)itaconat, Bis(2-Hydroxyethyl)itaconat, Bis(2-Hydroxy-ethyl)fumarat, Bis(2-Hydroxyethyl)maleat und Hydroxymethylvinylketon.

Die Anteile an den jeweiligen Monomeren in den erfindungsgemäß einzusetzenden aminomethylgruppenhaltigen ganz oder teilweise hydrierten Nitrilkautschuken können in weiten Bereichen schwanken.

Der Anteil des oder der Summe der konjugierten Diene liegt üblicherweise im Bereich von 49 bis 89 Gew.-%, bevorzugt im Bereich von 51 bis 81 Gew.-%, besonders bevorzugt 53 bis 77 und insbesondere 55 bis 73 Gew.-% bezogen auf den gesamten Nitrilkautschuk.

Der Anteil des oder der Summe der α,β-ungesättigten Nitrile liegt üblicherweise bei 10 bis 50 Gew.%, bevorzugt bei 18 bis 48 Gew.-%, besonders bevorzugt 22 bis 46 Gew.-% und insbesondere 26 bis 44 Gew.-% bezogen auf gesamten Nitrilkautschuk.

Der Anteil an Aminomethylgruppen beträgt vorzugsweise 0,01 bis 20 Gew.% besonders bevorzugt von 0,1 bis 15 Gew.%, weiter bevorzugt 0,5 bis 10 Gew.-% und ganz besonders bevorzugt 1 bis 5 Gew.-% bezogen auf den gesamten Nitrilkautschuk.

Die Anteile aller Monomere summieren sich zu 100 Gew.-%.

Die optionalen weiteren copolymerisierbaren Monomere können je nach Art in Mengen von 0 bis 50 Gew.%, bezogen auf den gesamten Nitrilkautschuk (i) vorliegen. In diesem Fall werden entsprechende Anteile des oder der konjugierten Diene und/oder des oder der α,β-ungesättigten Nitrile und/oder des aminomethylgruppenhaltigen Monomers durch die Anteile der zusätzlichen Monomere ersetzt, wobei sich die Anteile aller Monomere erneut jeweils zu 100 Gew.% aufsummieren.

Die Herstellung der zur Synthese der aminomethylgruppenhaltigen ganz oder teilweise hydrierten Nitrilkautschuke verwendeten ganz oder teilweise hydrierten Nitrilkautschuke ist dem Fachmann hinlänglich bekannt.

Diese ganz oder teilweise hydrierten Nitrilkautschuke weisen typischerweise einen Gehalt von α,β-ungesättigten Nitrilen, vorzugsweise Acrylnitril im Bereich von 18 bis 52 % und einen Gehalt an konjugierten Dienen, vorzugsweise Butadien von 48 bis 82 Gew.-%, bezogen auf den gesamten Nitrilkautschuk auf. Gegebenenfalls können auch bis zu 50 % anderer copolymerisierter Monomere im ganz oder teilweise hydrierten Nitrilkautschuke enthalten sein, wobei sich die Anteile an α,β-ungesättigten Nitrilen konjugierten Dienen entsprechend reduzieren, so dass sich die Anteile aller Monomere erneut jeweils zu 100 Gew.% aufsummieren. Die zur Herstellung der aminomethylgruppenhaltigen ganz oder teilweise hydrierten Nitrilkautschuke verwendeten ganz oder teilweise hydrierten Nitrilkautschuke weisen vorzugsweise keine Aminomethylgruppen auf. Diese werden nämlich durch Hydrierung der Nitrilgruppen erzeugt. Der Ausdruck ganz oder teilweise hydriert bezieht sich im Zusammenhang mit Nitrilkautschuken auf die C=C Doppelbindungen. Teilweise hydriert bedeutet dabei vorzugsweise einen Hydrierungsgrad von mindestens 80 %, bevorzugt mindestens 90 % besonders bevorzugt mindestens 95 % der C=C Doppelbindungen, wobei ab ein Hydrierungsgrad von 98 % der C=C Doppelbindungen der Nitrilkautschuk als vollhydriert bezeichnet wird. Die C=C Doppelbindungen leiten sich dabei üblicherweise von Dienmonomereinheiten ab. Da bei der erfindungsgemäßen Hydrierung typischerweise keine signifikanten Unterschiede im Molekulargewicht und der Viskosität auftreten, kann der Fachmann anhand der gewünschten Eigenschaften des aminomethylgruppenhaltigen ganz oder teilweise hydrierten Nitrilkautschuks den als Ausgangsmaterial verwendbaren ganz oder teilweise hydrierten Nitrilkautschuk geeignet wählen.

Die Vernetzung der aminomethylgruppenhaltigen ganz oder teilweise hydrierten Nitrilkautschuke kann sowohl in Lösung als auch in Substanz erfolgen. Durch Reaktion mit den erfindungsgemäßen Vernetzern werden Gelgehalte im Bereich von 15 % bis > 50 % erzielt.

Die vorliegende Erfindung betrifft auch ein Verfahren zur Herstellung von Vulkanisaten bei welchem die obigen erfindungsgemäßen Zusammensetzungen auf eine Temperatur im Bereich von 100 bis 250 °C, vorzugsweise 130 bis 220 °C besonders bevorzugt 150 bis 200 °C erwärmt werden.

Die vorliegende Erfindung betrifft zudem Vulkanisate welche durch Vulkanisation der erfindungsgemäßen Zusammensetzungen erhalten wurden.

Weiterhin umfasst die vorliegende Erfindung Formkörper wie beispielsweise Dichtungen, Manschetten, Schläuche, Reifen, Schwingungsdämpfer, Puffer usw., enthaltend ein Vulkanisat welches durch Vulkanisation der erfindungsgemäßen Zusammensetzungen erhältlich ist.

Die vorliegende Erfindung betrifft zudem die Verwendung der oben beschriebenen aminomethylgruppenhaltigen ganz oder teilweise hydrierten Nitrilkautschuke zur Herstellung von vulkanisierbaren Kautschukmischungen.

### Herstellung der aminomethylgruppenhaltigen ganz oder teilweise hydrierten Nitrilkautschuke.

Durch partielle Hydrierung der in ganz oder teilweise hydrierten Nitrilkautschuke enthaltenen Nitrilgruppen können diese in vulkanisationsaktive Aminomethylgruppen überführt werden.

Die Hydrierung gelingt mit einem Raney-Cobaltkatalysator. Üblicherweise wird dieser feucht eingesetzt, da eine Trocknung im Vakuum die Aktivität des Katalysators stark beeinträchtigt. Überraschend wurde nun gefunden, dass durch Trocknung des verwendeten Raney-Cobalt durch Vereinigen mit einem getrockneten Lösungsmittel und anschließender Abtrennung desselben, die Aktivität des Katalysators gesteigert werden kann. Die Kontaktzeit zwischen getrocknetem Lösungsmittel und Katalysator beträgt dabei vorzugsweise mindestens 10 Minuten besonders bevorzugt mindestens 1 h, ganz besonders bevorzugt mindestens 4 h und kann vom Fachmann geeignet eingestellt werden. Mechanische Verfahren zur Intensivierung des Wasseraustauschs zwischen Katalysator und Lösungsmittel wie Rühren der Aufschlämmung, Ultraschalleinwirkung etc. können die Trocknung gegenüber einer einfachen Mischung durch Zusammengeben der Komponenten beschleunigen. Geeignete Lösungsmittel sind alle organischen oder anorganischen, vorzugsweise organischen, Lösungsmittel, welche bei Raumtemperatur nicht mit Raney-Cobalt reagieren, d.h. weniger als 1 % von darin aufgeschlämmten Raney-Cobalt reagiert pro Stunde mit dem Lösungsmittel. Besonders bevorzugt sind THF, Dioxan und Methanol. Die getrockneten Lösungsmittel weisen typischerweise einen Wassergehalt von unter 0,5 Gew.-%, bevorzugt unter 0,1 Gew.-%, weiter bevorzugt unter 0,01 Gew.-% und meist bevorzugt unter 0,005 Gew.-% auf. Bevorzugt wird Raney-Cobalt vor der Anwendung durch mehrstündiges Kontaktieren mit THF getrocknet.

Überraschend wurde zudem gefunden, dass der Zusatz sulfidischer Additive die Aktivität des Katalysators erhöht, so dass eine Verringerung des Drucks, eine Verringerung der Substrat und/oder Katalysatorkonzentration bei der Reaktion, und/oder eine Verringerung der Reaktionstemperatur möglich ist. Somit kann alternativ zur Trocknung des Raney-Cobalt oder in Ergänzung dazu eine geeignete Reaktivität bei der Hydrierung von HNBR auch durch Zugabe von 0,01 bis 5 Gew.-%, vorzugsweise 0,05 bis 2,0 Gew.-% besonders bevorzugt 0,1 bis 1,0 Gew.-% ein oder mehrerer sulfidischer Additive, vorzugsweise ein oder mehrerer aliphatischer Sulfide, besonders bevorzugt Alkylsulfide und ganz besonders bevorzugt von Dodecylsulfid oder tert-Dodecylpolysulfid erzielt werden.

Raney-Cobalt ist kommerziell als wässrige Dispersion erhältlich. Der Gehalt an Cobalt liegt dabei typischerweise im Bereich von 76 bis 97 Gew.-%, der Gehalt an Aluminium im Bereich von 0 bis 6 Gew.-%. Des Weiteren können noch Promotormetalle enthalten sein wie z.B. Mangan im Bereich von 1,5 bis 10 Gew.-%. Der Gehalt an Nickel kann im Bereich von 1 bis 4 Gew.-% liegen und der Chromgehalt im Bereich von 1,5 bis 3,5 Gew.-%. Bei einer typischen Ausführungsform liegt die mittlere Partikelgröße des Katalysators im Bereich von 25 bis 55 µm.

In einer typischen Ausführungsform wird der Katalysatorschlamm abgewogen und überstehendes Wasser vorsichtig abgesaugt ohne das der Katalysator trocken wird oder überstehendes Wasser abdekantiert. Danach wird der wasserfeuchte Katalysator mindestens dreimal mit der ein- bis dreifachen Menge trockenem Tetrahydrofuran, Dioxan, Methanol bezogen auf die Katalysatortrockenmasse oder einem anderen mit Wasser gut mischbaren Lösungsmittel gewaschen, um das Wasser aus den Poren des Katalysators zu entfernen. Die Trocknung des Lösungsmittels erfolgt typischerweise mit Molsieb. In einer bevorzugten Ausführungsform erfolgt die Waschung des Katalysators mit dem Prozesslösungsmittel. Dann wird das Lösungsmittel abdekantiert und nochmals mit der ein- bis dreifachen Mengen Lösungsmittel versetzt, die Lösung mit Stickstoff gespült und bis zum Einsatz so gelagert. In einer bevorzugten Ausführungsform wird der lösungsmittelfeuchte Katalysator nochmals mit der ein- bis dreifachen Menge Lösungsmittel wie z.B. Tetrahydrofuran, Dioxan, Methanol oder einem anderen mit Wasser gut mischbaren Lösungsmittel versetzt, ggf. Stickstoff durch die Lösung geleitet und mindestens 2h, vorzugsweise mindestens 8h, besonders bevorzugt mindestens 24h stehen gelassen. Dann wird das Lösungsmittel abdekantiert und nochmals mit der ein- bis dreifachen Mengen Lösungsmittel versetzt, die Lösung mit Stickstoff gespült und bis zum Einsatz so gelagert. Eine andere mögliche Durchführung der Trocknung besteht darin, dass trockenes Inertgas wie Stickstoff oder Kohlenstoffdioxid, bevorzugt Kohlenstoffdioxid über den wasserfeuchten Raney-Katalysator geleitet wird. Durch die Reaktion des Kohlendioxids mit Wasser wird das Wasser aus den Katalysatorporen quantitativ entfernt.

Typischerweise wird die Hydrierung bei Temperaturen im Bereich von 60 °C bis 190 °C, vorzugsweise von 100 °C bis 180 °C und besonders bevorzugt von 120 °C bis 160 °C durchgeführt. Die entsprechende Vorbehandlung ermöglicht es die Hydrierung bei deutlich tieferen Temperaturen durchzuführen als für die Hydrierung niedermolekularer Nitrile üblich, sowie den Umsatz bei der Hydrierung zu erhöhen, ohne dass eine Vergelung des Polymers erfolgt. Die Verwendung eines heterogenen Katalysators schafft zudem die Möglichkeit, den Katalysator nach der Reaktion vollständig aus dem Polymer zu entfernen

In einer weiteren Ausführungsform wird die obige Katalysatorvorbehandlung kombiniert mit der zuvor beschriebenen Kontaktierung von ganz oder teilhydriertem Nitrilkautschuk mit Wasserstoff und dem Raney-Cobaltkatalysator in Gegenwart von Sulfiden.

Als Lösungsmittel für die Hydrierung geeignet sind aliphatische und zyklische Ether wie Tetrahydrofuran, Dioxane, Dibutylether, Methyl tertbutylether oder Kohlenwasserstoffe wie Toluol, Benzol. Besonders bevorzugt sind Tetrahydrofuran und Dioxan. Das Polymer wird zuvor in dem Lösungsmittel gelöst. Es können Polymerkonzentrationen von 6 bis 30 Gew.-%, bevorzugt von 6 bis 20 Gew.-% und besonders bevorzugt von 6 bis 15 Gew.-% eingesetzt werden.

Die Hydrierung erfolgt unter Wasserstoffdruck von 50 bis 250 bar, bevorzugt im Bereich von 50 bis 120 bar. Die optimale Reaktionstemperatur liegt im Bereich von 120 °C bis 180 °C, besonders bevorzugt von 120 bis 150 °C und ganz besonders bevorzugt im Bereich von 120 bis 135 °C. Temperaturen oberhalb 180 °C können bei Verwendung von Tetrahydrofuran oder Dioxan zu katalytischer Zersetzung des Lösungsmittels durch Raney Cobalt Katalysatoren führen (J. Chem. Tech. Biotechnol. 1989, 46, 303-312, Stability of 1,4-Dioxane, Tetrahydrofuran and Ethanol under Hydrogenation Conditions over Various Catalysts)

Nach der Hydrierung kann der Katalysator durch Filtration, Zentrifugation oder mittels eines Permanent- oder Elektromagneten abgetrennt werden. Nach Zugabe von Alterungsschutzmitteln wird das Lösungsmittel durch Aufblechen im Trockenschrank entfernt. Alternativ kann das aminierte HNBR durch Dampfstrippung oder Fällung mit Methanol oder Ethanol isoliert und anschließend getrocknet werden.

Die gemäß den obigen Verfahren erhaltenen, aminomethylgruppenhaltigen ganz oder teilweise hydrierten Nitrilkautschuke weisen typischerweise einen Gehalt an α,β-ungesättigten Nitrilen, vorzugsweise Acrylnitril von 10 - 50 Gew.-%, vorzugsweise 18 bis 48 Gew.%, besonders bevorzugt 22 bis 46 Gew.-% und ganz besonders bevorzugt 26 bis 44 Gew.% sowie eine Mooneyviskosität (ML 1+4/100°C) im Bereich von 10 bis 150 ME, vorzugsweise von 20 bis 130 ME, besonders bevorzugt von 39 bis 100 ME auf.

Im Zusammenhang mit der vorliegenden Erfindung ist unter Gehalt an α,β-ungesättigten Nitrilen, vorzugsweise Acrylnitril der Gewichtsanteil an denjenigen nitrilhaltigen Wiederholungseinheiten bezogen auf den gesamten Polymeranteil des Nitrilkautschuks zu verstehen, die sich von α,β-ungesättigten Nitrilen, vorzugsweise Acrylnitril ableiten.

In bevorzugten Ausführungsformen weisen die erfindungsgemäßen aminomethylgruppenhaltigen ganz oder teilweise hydrierten Nitrilkautschuke zudem eine oder mehrere, vorzugsweise alle nachfolgenden Eigenschaften auf:
- Aminomethylgruppengehalt: 0,01 bis 20 Gew.% besonders bevorzugt von 0,1 bis 15 Gew.%, weiter bevorzugt 0,5 bis 10 Gew.% und ganz besonders bevorzugt 1 bis 5 Gew.-%
- Gelgehalt von weniger als 10 %, vorzugsweise weniger als 5 %, besonders bevorzugt weniger als 3 %, ganz besonders bevorzugt weniger als 2 % und meist bevorzugt zwischen 0,01 und 1 %.
- sowohl voll- als oder teilhydriert (Hydriergrad der C=C Bindungen von 80 % bis 100 %)

Die Anwesenheit der Aminogruppen in erfindungsgemäßem aminomethylgruppenhaltigen Nitrilkautschuk kann beispielsweise nachgewiesen werden durch einen Ninhydrintest, bei welchem 50 mg Nitrilkautschuk in 2,5 ml Monochlorbenzol bei 70 °C aufgelöst wird, nach vollständiger Auflösung 200 µl Ninhydrin zugegeben und die Temperatur im Bereich zwischen 70 und 80 °C gehalten wird. Wenn nach spätestens zwei Minuten eine Violettfärbung auftritt, so kann auf die Anwesenheit von Aminogruppen geschlossen werden. Allerdings gilt zu beachten, dass ein negativer Ninhydrintest kein Ausschlusskriterium für erfindungsgemäßen aminomethylgruppenhaltigen Nitrilkautschuk darstellt, da beispielsweise Metallionen den Nachweis stören können.

### Beispiele

### Charakterisierungsmethoden

Der Gehalt an Aminomethylgruppen kann bestimmt werden, indem indirekt die Abnahme der Extinktion der Nitrilbande im IR-Spektrum bestimmt wird. Dafür werden 200 mg teilweise oder vollständig hydrierter Nitrilkautschuk in 10 ml Chlorbenzol gelöst und die Extinktion vor der Hydrierung bestimmt. Nach der Hydrierung werden exakt 200 mg des aminomethylgruppenhaltigen Nitrilkautschuks in 10 ml Chlorbenzol gelöst und wiederum die Extinktion bestimmt. Aus der Differenz der Extinktion kann der Umsatz der Nitrilgruppen und damit bei bekanntem Gehalt an eingebauten α,β-ungesättigten Nitrilen der Anteil der Aminomethylgruppen in Gew.-% bestimmt werden.

### Exemplarische Berechnung des Aminomethylgruppengehalts:

200 mg Therban® 3406 wurden in 10 ml Chlorbenzol gelöst und mittels IR-Spektroskopie die Extinktion der Nitrilbande ermittelt. Diese betrug 0,2451. 200 mg aminomethylgruppenhaltiges Therban® 3406 von Versuch 5 wurden in 10 ml Chlorbenzol gelöst und die Extinktion der Nitrilbande bei 2237 cm⁻¹ im IR gemessen. Daraus konnte ein CH₂NH₂-Anteil des aminomethylgruppenhaltigen HNBR von 2,6 Gew.-% bestimmt werden.

Bei unbekanntem Nitrilgehalt vor der Hydrierung kann zunächst der Stickstoffgehalt mittels Elementaranalyse bestimmt und daraus der Nitrilgehalt vor der Hydrierung berechnet werden. Durch Vergleich der gemessenen Extinktion bei der IR-Spektroskopie von 200 mg des aminomethylgruppenhaltigen Nitrilkautschuks in 10 ml Chlorbenzol mit der zu erwartenden Extinktion ermittelt durch Anwendung des berechneten Nitrilgehalts auf eine Kalibriergerade enthaltend die Extinktionswerte von 150, 170, 190, 210, 230 und 250 mg eines HNBR mit bekanntem Gehalt an eingebauten α,β-ungesättigten Nitrilen in jeweils 10 ml Chlorbenzol, kann aus der Differenz zwischen der zu erwartenden Extinktion und der tatsächlich gemessenen Extinktion dividiert durch die zu erwartende Extinktion der Anteil hydrierter Nitrilgruppen und aus diesem letztendlich der Aminomethylgruppengehalt bestimmt werden.

### Exemplarische Berechnung des Aminomethylgruppengehalts:

Stickstoffbestimmung: 8,83 Gew.-%. Daraus folgt ein Anteil an Nitrilgruppen (Mw = 26 g/mol) des HNBRs vor Einführung der Aminomethylgruppen von 16,4 % entsprechend einem Acrylnitrilgehalt von 34 Gew.-%. Die theoretisch zu erwartete Extinktion einer Polymerlösung (200 mg Polymer in 10 ml Chlorbenzol) betrug 0,2451. Tatsächlich wurde eine Extinktion von 0,2115 gemessen. Der Umsatz x der Nitrilgruppen betrug (0,2451-0,2115)/0,2451, d.h. 13,7 %. Daraus folgte ein CH₂NH₂-Anteil von 2,6 Gew.-%.

### Bestimmung des Gelgehalts

Zur Bestimmung des Gelgehalts (Gehalts unlöslicher Anteile in Methylethylketon) wurden 250 mg des aminomethylgruppenhaltigen HNBR in 25 ml Methylethylketon (MEK) 24 h bei 25 °C unter Rühren gelöst. Der unlösliche Anteil wurde durch Ultrazentrifugation bei 20.000 U/min bei 25 °C abgetrennt, getrocknet und gravimetrisch bestimmt. Der Gelgehalt wird in Gew.-% bezogen auf die Einwaage angegeben.

Zur Darstellung von Polymeren mit einem Gelgehalt der gegen 0 geht ist es möglich, die Polymere einer geeigneten Filtration zu unterziehen. Dem Fachmann sind die dafür geeigneten Methoden hinlänglich bekannt.

### Bestimmung der Mooneyviskosität

Die Bestimmung der Mooneyviskosität (ML 1+4@100°C) erfolgte mittels eines Scherscheibenviskosimeters nach ASTM D 1646 bei 100 °C.

Die Bestimmung des Restdoppelbindungsgehalts erfolgte auf der Basis der IR-spektroskopischen Methode gemäß Kautschuk + Gummi. Kunststoffe, Vol. 42 (1989), No. 2, pages 107-110 sowie Kautschuk + Gummi. Kunststoffe, Vol. 42 (1989), No.3, pages 194-197.

### Eingesetzte Nitrilkautschuke (HNBR):

### Therban® 3406 der Lanxess Deutschland GmbH:

Acrylnitrilgehalt: 34 Gew.-%
Mooneyviskosität (ML1+4/100°C): 63 ME
Restdoppelbindungsgehalt: 0,8 %)

| | |
|---|---|
| Mₙ: | 91,3 kg/mol |
| M_{w}: | 297 kg/mol |
| PDI (M_{w}/Mₙ): | 3,3 |
| Therban® 3443 der Lanxess Deutschland GmbH: | |
| Acrylnitrilgehalt: | 34 Gew.-% |
| Mooneyviskosität (ML1+4/100°C): | ca. 39 ME |
| Restdoppelbindungsgehalt: | 4 % |

### Eingesetzter Katalysator:

Für die Hydrierungen wurde Raney Cobalt der Firma Grace eingesetzt. Dieses Produkt wies folgende Eigenschaften auf:

| Hersteller | Grace |
|---|---|
| Genaue Produktbezeichnung | Raney® 2724 |
| Chem. Zusammensetzung | Co Gew.-% min. 86 |
| | Al Gew.-% min. 2, max 6 |
| Lieferform | Feststoffdispersion in Wasser |
| Feststoffkonzentration in Wasser [Gew.-%] | ca. 50 % |

### Katalysatorvorbereitung

### Normales Umwaschen des Katalysators auf THF:

Ca. 42 g Raney-Cobaltschlamm wurden abgewogen und überstehendes Wasser abdekantiert. Dabei wurde darauf geachtet, dass das Pulver nie komplett trocknete. Das Raney-Cobalt wurde zweimal mit ca. 100 ml Methanol gerührt, dekantiert und anschließend zweimal mit ca. 100 ml THF gerührt und dekantiert. Der Raney-Cobalt Katalysator wurde bis zum Einsatz THF-feucht gelagert.

### Spezielle Katalysatorvorbereitung:

Ca. 260 g kommerziell erhältlicher Raney-Cobalt Schlamm 2724 der Firma Grace wurden abgewogen und überstehendes Wasser vorsichtig abgesaugt. Das Raney-Cobalt wurde danach dreimal mit jeweils 200 ml THF umgewaschen. Anschließend wurde der Katalysator in eine Flasche überführt und mit 200 mL frischem, getrockneten THF versetzt. Durch die Lösung wurde nun 1h Stickstoff geleitet. Danach wurde das THF abdekantiert, der Ansatz mit 200mL frischem THF versetzt und 24h stehen gelassen. Am nächsten Tag wurde das THF nochmals abdekantiert und der Ansatz mit ca. 200 mL neuem getrocknetem THF versetzt. Durch die Lösung wurde anschließend 10 min Stickstoff geleitet.

### Herstellung von aminomethylgruppenhaltigem hydrierten Nitrilkautschuk

### Vergleichsbeispiel V1 (Blindprobe ohne spezielle Katalysatorvorbehandlung):

46 g Therban® 3406 wurden in einem Gemisch aus 150 g trockenem THF und 150 g trockenem Dioxan in einem 500 ml Kolben bei 60 °C für 1 bis 2 h in einem trockenen Kolben aufgelöst. Die Polymerlösung wurde unter Schutzgas in einen trockenen Autoklaven (700 ml) überführt. Der Autoklav wurde verschlossen und mit Stickstoff inertisiert. Es wurden 20 g Ammoniak zugegeben und danach Wasserstoff bis zu einem Druck von 50 bar aufgepresst. Anschließend wurde auf 130 °C erwärmt und die Reaktion bei dieser Temperatur isobar 4 h gefahren. Dabei wurde mit 1200 UpM gerührt. Anschließend wurde abgekühlt, der Autoklav mit Stickstoff gespült, dann geöffnet und die Reaktionslösung /-suspension in ein Vorratsgefäß abgefüllt. Anschließend wurde abgekühlt, der Autoklav mit Stickstoff gespült, dann geöffnet und die Reaktionslösung /suspension in ein Vorratsgefäß abgefüllt. Anschließend wurde die Lösung /-suspension über einer G3 Fritte mit Celite 545 filtriert, das Lösungsmittel zunächst am Rotationsverdampfer bei 60 °C und 11 mbar eingeengt und dann durch Aufblechen der Polymerlösung im Trockenschrank bei 50 °C getrocknet. Der Gelgehalt betrug: 0,7 %

### Vergleichsbeispiel V2: Zusatz von 50 g Wasser ohne spezielle Katalysatorvorbehandlung:

21 g Therban® 3406 wurden in einem Gemisch aus 150 g trockenem THF und 150 g trockenem Dioxan in einem 500 ml Kolben bei 60 °C für 1 bis 2 h in einem trockenen Kolben aufgelöst. Die Polymerlösung und 21 g (Trockenmasse) des gemäß obiger Vorschrift umgewaschenen THF-feuchten Raney-Cobaltkatalysators wurden unter Schutzgas in einen trockenen Autoklaven (700 ml) überführt. Zur Überführung wurden noch 50 g Wasser bereitgestellt, um das Katalysatorvorratsfläschchen vollständig auszuspülen. Der Autoklav wurde verschlossen und mit Stickstoff inertisiert. Es wurden 20 g Ammoniak zugegeben und danach Wasserstoff bis zu einem Druck von 50 bar aufgepresst. Anschließend wurde auf 130 °C erwärmt und die Reaktion bei dieser Temperatur isobar 24 h gefahren. Dabei wurde mit 1200 UpM gerührt. Anschließend wurde abgekühlt, der Autoklav mit Stickstoff gespült, dann geöffnet und die Reaktionslösung /-suspension in ein Vorratsgefäß abgefüllt. Anschließend wurde versucht die Lösung /-suspension über das BHS-Taschenmeßgerät TMG 400 zu filtrieren, was aufgrund fast vollständiger Vergelung mit dem Großteil der gummiartigen Masse nicht möglich war. Die filtrierbare Lösung wurde auf ein Blech überführt und im Vakuumtrockenschrank bei 50 °C getrocknet. Es wurden 1,44 g (Ausbeute 7,7 %) erhalten, welche sich jedoch auch in Chlorbenzol nicht mehr lösen ließen.

### Beispiel A1: Hydrierung mit 50 bar H₂ ohne spezielle Katalysatorvorbehandlung:

21 g Therban® 3406 wurden in einem Gemisch aus 150 g trockenem THF und 150 g trockenem Dioxan in einem 500 ml Kolben bei 60 °C für 1 bis 2 h in einem trockenen Kolben aufgelöst. Die Polymerlösung und 21 g (Trockenmasse) des gemäß obiger Vorschrift umgewaschenen THF-feuchten Raney-Cobaltkatalysators wurden unter Schutzgas in einen trockenen Autoklaven (700 ml) überführt. Zur Überführung wurden noch 50 g THF bereitgestellt, um das Katalysatorvorratsfläschchen vollständig auszuspülen. Der Autoklav wurde verschlossen und mit Stickstoff inertisiert. Es wurden 20 g Ammoniak zugegeben und danach Wasserstoff bis zu einem Druck von 50 bar aufgepresst. Anschließend wurde auf 130 °C erwärmt und die Reaktion bei dieser Temperatur isobar 24 h gefahren. Dabei wurde mit 1200 UpM gerührt. Anschließend wurde abgekühlt, der Autoklav mit Stickstoff gespült, dann geöffnet und die Reaktionslösung /-suspension in ein Vorratsgefäß abgefüllt. Anschließend wurde die Lösung /-suspension über das BHS-Taschenmeßgerät TMG 400 filtriert. Ein Teil des Lösungsmittelgemisches wurde am Rotationsverdampfer entfernt, dann die Polymerlösung auf ein Blech überführt und bei 50 °C im Vakuumtrockenschrank getrocknet. Der ermittelte Umsatz der Nitrilgruppen betrug 4 %, woraus sich ein Aminomethylgruppengehalt von 0,8 Gew.-% ableitete. Gelgehalt: 7,2 %, Mooneyviskosität: 96,7 ME.

### Beispiel A2: Hydrierung mit 50 bar H₂ ohne spezielle Katalysatorvorbehandlung unter Zusatz von n-Dodecylsulfid:

21 g Therban® 3406 wurden in einem Gemisch aus 150 g trockenem THF und 150 g trockenem Dioxan in einem 500 ml Kolben bei 60 °C für 1 bis 2 h in einem trockenen Kolben aufgelöst. Die Polymerlösung, 21 g (Trockenmasse) des gemäß obiger Vorschrift umgewaschenen THF-feuchten Raney-Cobaltkatalysators und 21 mg n-Dodecylsulfid (0,1 Gew.-% bezogen auf die Katalysatormenge) wurden unter Schutzgas in einen trockenen Autoklaven (700 ml) überführt. Zur Überführung wurden noch 50 g THF bereitgestellt, um das Katalysatorvorratsfläschchen vollständig auszuspülen. Der Autoklav wurde verschlossen und mit Stickstoff inertisiert. Es wurden 20 g Ammoniak zugegeben und danach Wasserstoff bis zu einem Druck von 50 bar aufgepresst. Anschließend wurde auf 130 °C erwärmt und die Reaktion bei dieser Temperatur isobar 24 h gefahren. Dabei wurde mit 1200 UpM gerührt. Anschließend wurde abgekühlt, der Autoklav mit Stickstoff gespült, dann geöffnet und die Reaktionslösung /-suspension in ein Vorratsgefäß abgefüllt. Anschließend wurde die Lösung /-suspension über das BHS-Taschenmeßgerät TMG 400 filtriert. Ein Teil des Lösungsmittelgemisches wurde am Rotationsverdampfer entfernt, und die Polymerlösung dann auf ein Blech überführt und bei 50 °C im Vakuumtrockenschrank getrocknet. Der ermittelte Umsatz der Nitrilgruppen betrug 7,7 %, woraus sich ein Aminomethylgruppengehalt von 1,5 Gew.-% ableitete. Gelgehalt: 4,7 %, Mooneyviskosität: 81,5 ME.

### Beispiel A3: Hydrierung mit spezieller Katalysatorvorbereitung bei 50 bar:

21 g Therban® 3406 wurden in einem Gemisch aus 150 g trockenem THF und 150 g trockenem Dioxan in einem 500 ml Kolben bei 60 °C für 1 bis 2 h in einem trockenen Kolben aufgelöst. Die Polymerlösung, 21 g (Trockenmasse) des oben beschriebenen, speziell vorbehandelten Raney-Cobaltkatalysators als Aufschlämmung in THF wurden unter Schutzgas in einen trockenen Autoklaven (700 ml) überführt. Zur Überführung wurden noch 50 g THF bereitgestellt, um das Katalysatorvorratsfläschchen vollständig auszuspülen. Der Autoklav wurde verschlossen und mit Stickstoff inertisiert. Es wurden 20 g Ammoniak zugegeben und danach Wasserstoff bis zu einem Druck von 50 bar aufgepresst. Anschließend wurde auf 130 °C erwärmt und die Reaktion bei dieser Temperatur isobar 24 h gefahren. Dabei wurde mit 1200 UpM gerührt. Anschließend wurde abgekühlt, der Autoklav mit Stickstoff gespült, dann geöffnet und die Reaktionslösung /-suspension in ein Vorratsgefäß abgefüllt. Anschließend wurde die Lösung /-suspension über das BHS-Täschenmeßgerät TMG 400 filtriert. Ein Teil des Lösungsmittelgemisches wurde am Rotationsverdampfer entfernt, und die Polymerlösung dann auf ein Blech überführt und bei 50 °C im Vakuumtrockenschrank getrocknet. Der ermittelte Umsatz der Nitrilgruppen betrug 6,3 %, woraus sich ein Aminomethylgruppengehalt von 1,2 Gew.-% ableitete. Gelgehalt: 6,2 %, Mooneyviskosität: 90,6 ME.

### Beispiel A4: Hydrierung mit spezieller Katalysatorvorbereitung bei 50 bar und n-Dodecylsulfid:

21 g Therban® 3406 wurden in einem Gemisch aus 150 g trockenem THF und 150 g trockenem Dioxan in einem 500 ml Kolben bei 60 °C für 1 bis 2 h in einem trockenen Kolben aufgelöst. Die Polymerlösung, 21 g (Trockenmasse) des oben beschriebenen, speziell vorbehandelten Raney-Cobaltkatalysators als Aufschlämmung in THF und 21 mg n-Dodecylsulfid (0,1 Gew.-% bezogen auf die Katalysatormenge) wurden unter Schutzgas in einen trockenen Autoklaven (700 ml) überführt. Zur Überführung wurden noch 50 g THF bereitgestellt, um das Katalysatorvorratsfläschchen vollständig auszuspülen. Der Autoklav wurde verschlossen und mit Stickstoff inertisiert. Es wurden 20 g Ammoniak zugegeben und danach Wasserstoff bis zu einem Druck von 50 bar aufgepresst. Anschließend wurde auf 130 °C erwärmt und die Reaktion bei dieser Temperatur isobar 24 h gefahren. Dabei wurde mit 1200 UpM gerührt. Anschließend wurde abgekühlt, der Autoklav mit Stickstoff gespült, dann geöffnet und die Reaktionslösung /-suspension in ein Vorratsgefäß abgefüllt. Anschließend wurde die Lösung /-suspension über das BHS-Taschenmeßgerät TMG 400 filtriert. Ein Teil des Lösungsmittelgemisches wurde am Rotationsverdampfer entfernt, und die Polymerlösung dann auf ein Blech überführt und bei 50 °C im Vakuumtrockenschrank getrocknet. Der ermittelte Umsatz der Nitrilgruppen betrug 13,4 %, woraus sich ein Aminomethylgruppengehalt von 2,5 Gew.-% ableitete. Gelgehalt: 5,2 %, Mooneyviskosität: 87,0 ME.

### Beispiel A5: Hydrierung bei 120 bar H₂ mit spezieller Katalysatorvorbereitung:

21 g Therban® 3406 wurden in einem Gemisch aus 150 g trockenem THF und 150 g trockenem Dioxan in einem 500 ml Kolben bei 60 °C für 1 bis 2 h in einem trockenen Kolben aufgelöst. Die Polymerlösung und 21 g (Trockenmasse) des oben beschriebenen, speziell vorbehandelten Raney-Cobaltkatalysators als Aufschlämmung in THF wurden unter Schutzgas in einen trockenen Autoklaven (700 ml) überführt. Zur Überführung wurden noch 50 g THF bereitgestellt, um das Katalysatorvorratsfläschchen vollständig auszuspülen. Der Autoklav wurde verschlossen und mit Stickstoff inertisiert. Es wurden 20 g Ammoniak zugegeben und danach Wasserstoff bis zu einem Druck von 120 bar aufgepresst. Anschließend wurde auf 130 °C erwärmt und die Reaktion bei dieser Temperatur isobar 24 h gefahren. Dabei wurde mit 1200 UpM gerührt. Anschließend wurde abgekühlt, der Autoklav mit Stickstoff gespült, dann geöffnet und die Reaktionslösung /suspension ein Vorratsgefäß abgefüllt. Anschließend wurde die Lösung /-suspension über das BHS-Taschenmeßgerät TMG 400 filtriert. Ein Teil des Lösungsmittelgemisches wurde am Rotationsverdampfer entfernt, und die Polymerlösung dann auf ein Blech überführt und bei 50 °C im Vakuumtrockenschrank getrocknet. Der ermittelte Umsatz der Nitrilgruppen betrug 13,7 %, woraus sich ein Aminomethylgruppengehalt von 2,6 Gew.-% ableitete. Gelgehalt: 6,1 %, Mooneyviskosität: n.b.

### Beispiel A6: Hydrierung bei 120 bar H₂ mit spezieller Katalysatorvorbereitung und niedrigerer Katalysatorbeladung:

21 g Therban® 3406 wurden in einem Gemisch aus 150 g trockenem THF und 150 g trockenem Dioxan in einem 500 ml Kolben bei 60 °C für 1 bis 2 h in einem trockenen Kolben aufgelöst. Die Polymerlösung und 10,5 g (Trockenmasse) des oben beschriebenen, speziell vorbehandelten Raney-Cobaltkatalysators als Aufschlämmung in THF wurden unter Schutzgas in einen trockenen Autoklaven (700 ml) überführt. Zur Überführung wurden noch 50 g THF bereitgestellt, um das Katalysatorvorratsfläschchen vollständig auszuspülen. Der Autoklav wurde verschlossen und mit Stickstoff inertisiert. Es wurden 20 g Ammoniak zugegeben und danach Wasserstoff bis zu einem Druck von 120 bar aufgepresst. Anschließend wurde auf 130 °C erwärmt und die Reaktion bei dieser Temperatur isobar 24 h gefahren. Dabei wurde mit 1200 UpM gerührt. Anschließend wurde abgekühlt, der Autoklav mit Stickstoff gespült, dann geöffnet und die Reaktionslösung /-suspension in ein Vorratsgefäß abgefüllt. Anschließend wurde die Lösung /-suspension über das BHS-Taschenmeßgerät TMG 400 filtriert. Ein Teil des Lösungsmittelgemisches wurde am Rotationsverdampfer entfernt, und die Polymerlösung dann auf ein Blech überführt und bei 50 °C im Vakuumtrockenschrank getrocknet. Der ermittelte Umsatz der Nitrilgruppen betrug 12,9 %, woraus sich ein Aminomethylgruppengehalt von 2,4 % ableitete. Gelgehalt: 2,4 Gew.-%, Mooneyviskosität: n.b.

### Beispiel A7: Hydrierung bei 120 bar H₂ mit spezieller Katalysatorvorbereitung hochskaliert.

263 g Therban® 3406 wurden in einem Gemisch aus 750 g trockenem THF und 750 g trockenem Dioxan in einem 2 I Kolben bei 60 °C für 1 bis 2 h in einem trockenen Kolben aufgelöst. Die Polymerlösung und 131,5 g (Trockenmasse) des oben beschriebenen, speziell vorbehandelten Raney-Cobaltkatalysators als Aufschlämmung in THF wurden unter Schutzgas in einen trockenen Autoklaven (3 I) überführt. Zur Überführung wurden noch 250 g THF bereitgestellt, um das Katalysatorvorratsfläschchen vollständig auszuspülen. Der Autoklav wurde verschlossen und mit Stickstoff inertisiert. Es wurden 108 g Ammoniak zugegeben und danach Wasserstoff bis zu einem Druck von 120 bar aufgepresst. Anschließend wurde auf 130 °C erwärmt und die Reaktion bei dieser Temperatur isobar 24 h gefahren. Dabei wurde mit 1200 UpM gerührt. Anschließend wurde abgekühlt, der Autoklav mit Stickstoff gespült, dann geöffnet und die Reaktionslösung /-suspension in ein Vorratsgefäß abgefüllt. Anschließend wurde die Lösung /-suspension über das BHS-Taschenmeßgerät TMG 400 filtriert. Ein Teil des Lösungsmittelgemisches wurde am Rotationsverdampfer entfernt, dann die Polymerlösung auf ein Blech überführt und bei 50 °C im Vakuumtrockenschrank getrocknet. Der ermittelte Umsatz der Nitrilgruppen betrug: 11,6 %, woraus sich ein Aminomethylgruppengehalt von 2,2 Gew.-% ableitete. Gelgehalt: 5,9 %, Mooneyviskosität: 88,6 ME, Co-Gehalt im Polymerprodukt: 30 mg/kg.

### Beispiel A8 : Hydrierung von Therban® 3443®

52 g Therban® 3443® wurden in einem Gemisch aus 150 g trockenem THF und 150 g trockenem Dioxan in einem 2 I Kolben bei 60 °C für 1 bis 2 h in einem trockenen Kolben aufgelöst. Die Polymerlösung und 26 g (Trockenmasse) des oben beschriebenen, speziell vorbehandelten Raney-Cobaltkatalysators als Aufschlämmung in THF wurden unter Schutzgas in einen trockenen Autoklaven (3 I) überführt. Zur Überführung wurden noch 50 g THF bereitgestellt, um das Katalysatorvorratsfläschchen vollständig auszuspülen. Der Autoklav wurde verschlossen und mit Stickstoff inertisiert. Es wurden 21 g Ammoniak zugegeben und danach Wasserstoff bis zu einem Druck von 120 bar aufgepresst. Anschließend wurde auf 130 °C erwärmt und die Reaktion bei dieser Temperatur isobar 24 h gefahren. Dabei wurde mit 1200 UpM gerührt. Anschließend wurde abgekühlt, der Autoklav mit Stickstoff gespült, geöffnet und die Reaktionslösung /-suspension in ein Vorratsgefäß abgefüllt. Anschließend wurde die Lösung /-suspension über das BHS-Taschenmeßgerät TMG 400 filtriert. Ein Teil des Lösungsmittelgemisches wurde am Rotationsverdampfer entfernt, und die Polymerlösung dann auf ein Blech überführt und bei 50 °C im Vakuumtrockenschrank getrocknet. Der ermittelte Umsatz an Nitrilgruppen, der Gelgehalt sowie die Mooneyviskosität ist in Tabelle 1 aufgeführt.

**Tabelle 1**

| Bsp. | Temp [°C] | Therban® Konz. [Gew.-%] | Druck [bar] | Druck nach Erwärmen [bar] | NH₃ [g] | Therban® : Kat | Sulfid [Gew.-%] | Kat. Vorbeh. | Ninhydrintest | Hydrie rung CN [%] | Gelgehalt [%] | Mooney visk. (ME) |
|---|---|---|---|---|---|---|---|---|---|---|---|---|
| A1 | 130 | 6 | 50 | 80 | 20 | 1:1 | - | nein | Positiv | 4,0 | 7,2 | 96,7 |
| A2 | 130 | 6 | 50 | 70 | 20 | 1:1 | 0,1 | nein | Positiv | 7,7 | 4,7 | 81,5 |
| A3 | 130 | 6 | 50 | 79 | 20 | 1:1 | - | ja | Positiv | 6,3 | 6,2 | 90,6 |
| A4 | 130 | 6 | 50 | 78 | 20 | 1:1 | 0,1 | ja | Positiv | 13,4 | 5,2 | 87,0 |
| A5 | 130 | 6 | 120 | 174 | 20 | 1:1 | - | ja | Positiv | 13,7 | 6,1 | n.b. |
| A6 | 130 | 6 | 120 | 170 | 20 | 2:1 | - | ja | Positiv | 12,9 | 4,2 | n.b. |
| A7 | 130 | 12 | 120 | 140 | 108 | 2:1 | - | ja | Positiv | 11,6 | 5,9 | 88,6 |
| A8 | 130 | 12 | 120 | 147 | 21 | 2:1 | - | ja | n.d. | 4,1 | 6,4 | 65,6 |

| | | | | | | | | | | | | |
|---|---|---|---|---|---|---|---|---|---|---|---|---|
| n.d.= nicht durchgeführt | | | | | | | | | | | | |

### Vernetzung des aminomethylgruppenhaltigem hydrierten Nitrilkautschuks

### Allgemeine Beschreibung der Durchführung der Vernetzung von aminomethylgruppen-haltigem HNBR in Lösung:

In einen 100 ml Kolben wurde aminomethylgruppenhaltiger HNBR in 45 g (ca. 35 ml) 1,2-Dichlorbenzol unter Rühren mit einem KPG-Rührer gelöst. Dazu wurden Vernetzer und o-Tolylguanidin gegeben und anschließend 2 h unter Rückfluss (auf 180 °C) erhitzt.

### Allgemeine Beschreibung der Durchführung der Vernetzung mit aminomethylgruppenhaltigem HNBR in Substanz:

In einen 100 ml Kolben wurde aminomethylgruppenhaltiger HNBR vom Typ Therban® 3406 in 27 g Dichlormethan unter Rühren mit einem KPG-Rührer gelöst. Dazu wurden Vernetzer und o-Toluylguanidin gegeben und anschließend die Lösung 1 h durch Rühren homogenisiert. Danach wurde das Lösungsmittel am Rotationsverdampfer bei RT bis zur Trockne entfernt. Dann wurde das trockene Gemisch im Kolben mehrere Minuten mit Stickstoff gespült und für 2 h oder 24 h bei 180 °C unter Stickstoff getempert.

### Durchführung der Gelbestimmung nach der Vernetzung

In einer Soxthletapparatur (100 ml Kolben, Soxhletextraktor, Rückflusskühler) wurde das vernetzte aminomethylgruppenhaltige HNBR in einer Extraktionshülse (von WhatmanTM, Extraktionshülsen 603, 33 mm x 130 mm) vorgelegt und mit Chlorbenzol 24 h bei 132 °C extrahiert. Der Filter wurde im Trockenschrank bei milden Temperaturen (30 °C) getrocknet und die Masse bestimmt. Der Gelgehalt wurde bestimmt (Masse Filter nach Extraktion minus Masse des Filters vorher). Das extrahierte unvernetzte Therban® wurde getrocknet und davon auch die Masse bestimmt.

**Tabelle 2: Vernetzung von aminomethylgruppenhaltige Therban® 3406 mit einem Aminomethylgruppengehalt von 1,7 Gew.-%, Vernetzung in Lösung in Dichlorbenzol 180 °C, 2 h.**

| Vernetzer | Maleinsäureanhydrid | Itaconsäureanhydrid |
|---|---|---|
| Molmasse des Vernetzers [g/mol] | 98,06 | 112,08 |
| Einwaage aminiertes HNBR [g] | 5,03 | 5,03 |
| Einwaage Vernetzer [g] | 0,1504 | 0,1507 |
| Molverhältnis Aminomethylgruppen/Vernetzer | 1 : 0,54 | 1 : 0,47 |
| Einwaage Tolylguanidin [g] | 0,1650 | 0,1647 |
| eingesetzte Masse [g] | 5,3454 | 5,3454 |
| Auswaage unvernetztes Polymer [g] | 3,32 | 2,47 |
| Ausbeute [%] | 62,1 | 46,2 |
| Auswaage Hülse [g] | 1,63 | 1,93 |
| Vergelungsgrad [%] | 30,5 | 36,1 |
| Gesamt [%] | 92,6 | 82,3 |

**Tabelle 3: Vernetzung mit aminomethylgruppenhaltigem Therban® 3406 mit einem Aminomethylgruppengehalt von 2,3 Gew.-%, Vernetzung in Lösung in Dichlorbenzol 180 °C, 20 h.**

| Vernetzer | 4,4'-(4,4'-Isopropyliden-diphenoxy)bis(phthalsäure-anhydrid) | 5-Aminoisatosäureanhydrid |
|---|---|---|
| Molmasse des Vernetzers [g/mol] | 520,49 | 178,14 |
| Einwaage aminiertes HNBR [g] | 3,01 | 3,04 |
| Einwaage Vernetzer [g] | 0,3010 | 0,3039 |
| Molverhältnis Aminomethylgruppen/Vernetzer | 1 : 0,25 | 1 : 0,73 |
| Einwaage Tolylguanidin [g] | 0,3307 | 0,3301 |
| eingesetzte Masse [g] | 3,6417 | 3,6740 |
| Auswaage unvernetztes Polymer [g] | 3,32 | 3,10 |
| Ausbeute [%] | 91,2 | 84,4 |
| Masse Gel [g] | 0,3217 | 0,574 |
| Vergelungsgrad [%] | 8,8 | 15,6 |
| Gesamt [%] | 100 | 100 |

**Tabelle 4: Vernetzung mit aminomethylgruppenhaltigem Therban® 3406 mit einem Aminomethylgruppengehalt von 2,3 Gew.-%, Vernetzung in Substanz, 180 °C, 24 h:**

| Vernetzer | Maleinsäureanhydrid | Itaconsäureanhydrid |
|---|---|---|
| Molmasse des Vernetzers [g/mol] | 98,06 | 112,08 |
| Einwaage aminiertes HNBR [g] | 3,03 | 2,98 |
| Einwaage Vernetzer [g] | 0,0903 | 0,0913 |
| Molverhältnis Aminomethylgruppen/Vernetzer | 1 : 0,4 | 1 : 0,36 |
| Einwaage o-Tolylguanidin [g] | 0,0998 | 0,0989 |
| eingesetzte Masse [g] | 3,2201 | 3,1702 |
| Auswaage unvernetztes Polymer [g] | 1,3 | 1,25 |
| Ausbeute [%] | 40,4 | 39,4 |
| Masse Gel [g] | 1,9 | 1,780 |
| Vergelungsgrad [%] | 59,0 | 56,1 |
| Gesamt [%] | 99,4 | 95,6 |

**Tabelle 5: Vernetzung mit aminomethylgruppenhaltigem Therban® 3406 mit einem Aminomethylgruppengehalt von 1,4 Gew.-%, bzw. mit Therban® (ohne Aminomethylgruppen), Vernetzung in Substanz 180 °C, 2 h oder 24 h:**

| Vernetzer | Maleinsäure-anhydrid, 24 h | Maleinsäure-anhydrid, 24 h | Maleinsäure-anhydrid, 2 h | Maleinsäure-anhydrid, 24 h (Vergleichsexp.) |
|---|---|---|---|---|
| Molmasse des Vernetzers [g/mol] | 98,06 | 98,06 | 98,06 | 98,06 |
| Einwaage aminiertes HNBR [g] | 2,98 | 2,98 | 3,00 | - |
| Einwaage Therban® 3406 [g] | - | - | - | 3,0 |
| Einwaage Vernetzer [g] | 0,0908 | 0,09 | 0,09 | 0,0891 |
| Molverhältnis Am inomethylgruppen/Vernetzer | 1 : 0,66 | 1 : 0,66 | 1 : 0,66 | - |
| Einwaage o-Tolylguanidin [g] | 0,0987 | 0,00 | 0,00 | 0,0990 |
| eingesetzte Masse [g] | 3,1695 | 3,07 | 3,09 | 3,1881 |
| Auswaage unvernetztes Polymer [g] | 1,19 | 0,93 | 0,97 | 2,96 |
| Ausbeute in [%] | 37,6 | 30,3 | 31,4 | 92,9 |
| Masse Gel [g] | 1,81 | 2,10 | 2,05 | 0,15 |
| Vergelungsgrad [%] | 57,1 | 68,4 | 66,4 | 4,7 |
| Gesamt [%] | 94,7 | 98,7 | 97,8 | 97,6 |

Die Vernetzung mit Maleinsäureanhydrid ohne zusätzliches Vernetzungsmittel o-Tolylguanidin, ergibt noch bessere Vergelung. Tempern über 2 h bei 180 °C führt zu nahezu identischen Vernetzungsergebnissen wie eine 24-stündige Wärmebehandlung.

**Tabelle 6: Vernetzung mit aminomethylgruppenhaltigem Therban® 3406 mit einem Aminomethylgruppengehalt von 2,6 Gew.-%, Vernetzung in Substanz 180 °C, 2 h:**

| Vernetzer | Maleinsäure-anhydrid | Maleinsäure-anhydrid | Maleinsäure-anhydrid | Maleinsäure-anhydrid | Maleinsäure-anhydrid |
|---|---|---|---|---|---|
| Molmasse Vernetzer [g/mol] | 98,06 | 98,06 | 98,06 | 98,06 | 98,06 |
| Einwaage aminiertes HNBR [g] | 2,96 | 2,99 | 2,97 | 3,07 | 3,02 |
| Einwaage Vernetzer [g] | 0,21 | 0,42 | 0,62 | 0,86 | 1,01 |
| Molverhältnis Aminomethylgruppen/Vernetzer | 1 : 0,83 | 1 : 1,6 | 1 : 2,4 | 1 : 3,3 | 1 : 3,9 |
| Einwaage o-Tolylguanidin [g] | 0,00 | 0,00 | 0,00 | 0,00 | 0,00 |
| eingesetzte Masse [g] | 3,17 | 3,41 | 3,59 | 3,93 | 4,03 |
| Auswaage unvernetztes Polymer [g] | 2,02 | 0,84 | 0,96 | 2,54 | 1,76 |
| Ausbeute [%] | 63,8 | 24,6 | 26,7 | 64,7 | 43,6 |
| Masse Gel [g] | 0,78 | 1,93 | 2,13 | 0,84 | 1,47 |
| Vergelungsgrad [%] | 24,6 | 56,6 | 59,3 | 21,4 | 36,5 |
| Gesamt | 88,4 | 81,2 | 86,0 | 86,1 | 80,1 |

**Tabelle 7: Vernetzung mit aminomethylgruppenhaltigem Therban® 3406 mit einem Aminomethylgruppengehalt von 1,4 Gew.-%, Vernetzung in Substanz 180 °C, 2 h:**

| Vernetzer | Pyromellitsäuredianhydrid |
|---|---|
| Molmasse Vernetzer [g/mol] | 218,12 |
| Einwaage aminiertes HNBR [g] | 2,98 |
| Einwaage Vernetzer [g] | 0,1947 |
| Molverhältnis Aminomethylgruppen/Vernetzer | 1 : 0,64 |
| Einwaage o-Tolylguanidin [g] | 0 |
| eingesetzte Masse [g] | 3,1747 |
| Auswaage unvernetzes Polymer [g] | 1,05 |
| Ausbeute [%] | 33,2 |
| Masse Gel in [g] | 1,83 |
| Vergelungsgrad [%] | 57,6 |
| Gesamt [%] | 90,8 |

Die Vernetzung der erfindungsgemäßen aminomethylgruppenhaltigen hydrierten Nitrilkautschuke kann durch geeignete Dicarbonsäurederivate insbesondere Dicarbonsäureanhydride erfolgen. Die Aminomethylgruppen an den Polymerketten reagieren dabei mit den Dicarbonsäurederivaten unter Ausbildung von Amidfunktionalitäten, welche Vernetzungsbrücken zwischen den Kautschukketten bilden (Vernetzung bzw. Vulkanisation). Die Vernetzung mit Pyromellitsäuredianhydrid zeigte, dass es zudem möglich ist mit aromatischen Dianhydriden oder Polyanhydriden zu vernetzen und damit besonders stabile Imidbrücken zu generieren.

**Tabelle 8: Weitere Ausgangsstoffe für Vernetzungsversuche**

| Substanz | Beschreibung |
|---|---|
| Zetpol® ZTP 136 | carboxylfunktionalisiertes HNBR der Zeon Corporation |
| DIAK No.1 | Hexamethylenediamincarbamat |
| Rhenogran® DOTG-70 | Di-ortho-tolylguanidin der Rhein Chemie, Vulkanisationsbeschleuniger |
| DBU | 1,8-Diazabicyclo[5.4.0]undec-7-en |

**Tabelle 9: Vernetzung von carboxylfunktionalisiertem HNBR (Zetpol® ZTP 136) mit Amin (DIAK No.1) und von aminofunktionalisiertem Therban® 3406 mit Pyromellitsäuredianhydrid**

| | Referenz 1 | erfindungsgemäß | erfindungsgemäß |
|---|---|---|---|
| Vulkanisation | TC90+10%/ 170°C (16,5 min) | TC90+10%/ 170 °C (40 min) | TC90+10%/ 170°C (40 min) |
| Tempern | 4h/170°C | 4h/170°C | 4h/170°C |
| Zetpol® ZTP 136 | 100 | | |
| aminofunktionalisiertes Therban® 3406 2,3 Gew-% CH₂NH₂-Gruppengehalt | | 100 | 100 |
| DIAK No.1 | 2,60 phr | | |
| Rhenogran DOTG-70 | 2,86 phr | | |
| Pyromellitdianhydrid | | 26,3 phr | 26,3 phr |
| DBU | | | 2,21 phr |
| IRHD-Mikrohärte | 71 | 75 | 83 |
| Dichte [g/cm³] | 1,108 | 1,122 | 1,163 |
| Zugfestigkeit [MPa] | 23,5 | 24 | 27,1 |
| Spannungswert 50 % [MPa] | 2,6 | 2,6 | 5,4 |
| Spannungswert 100 % [MPa] | 7,3 | 5 | 12,4 |
| Spannungswert 200 % [MPa] | 17,9 | 12,2 | 25,5 |
| Spannungswert 300 % [MPa] | 0 | 20,3 | |
| Reißdehnung [%] | 256 | 348 | 214 |
| Beständigkeitsmaß* | 10456 | 17637 | 12409,4 |

**Tabelle 10: Weitere Ausgangsstoffe für Vernetzungsversuche**

| Substanz | Beschreibung |
|---|---|
| Zetpol® ZTP 136 | carboxylfunktionalisiertes HNBR der Zeon Corporation |
| aminofunktionalisiertes Therban® 3406 | aminofunktionalisiertes Therban® 3406 2,3 wt% CH₂NH₂-Gruppengehalt |
| DIAK No.1 | Hexamethylenediamincarbamat |
| Rhenogran® DOTG-70 | Di-ortho-tolylguanidin der Rhein Chemie, Vulkanisationsbeschleuniger |
| Rhenogran® Geniplex-80 | Zinkdicyanatodiamin |

**Tabelle 11: Vernetzung von carboxylfunktionalisiertem HNBR (Zetpol® ZTP 136) mit Amin (DIAK No.1) und von aminofunktionalisiertem Therban® 3406 mit Pyromellitsäuredianhydrid und Rhenogran® Geniplex-80.**

| | Referenz 1 | erfindungsgemäß |
|---|---|---|
| Vulkanisation | TC90+10%/ 170°C (16,5 min) | TC90+10%/ 170°C (40 min) |
| Tempern | 4h/170°C | 4h/170°C |
| Zetpol® ZTP 136 | 100 | |
| aminofunktionalisiertes Therban® 3406 2,3 wt% CH₂NH₂-Gruppengehalt | | 100 |
| DIAK No.1 | 2,60 phr | |
| Rhenogran DOTG-70 | 2,86 phr | |
| Pyromellitdianhydrid | | 52,94 phr |
| Rhenogran® Geniplex-80 | | 2,21 phr |
| IRHD-Mikrohärte | 71 | 92 |
| Dichte [g/cm³] | 1,108 | 1,271 |
| Zugfestigkeit [MPa] | 23,5 | 22,0 |
| Spannungswert 50 % [MPa] | 2,6 | 9,9 |
| Spannungswert 100 % [MPa] | 7,3 | 14,7 |
| Spannungswert 200 % [MPa] | 17,9 | 19 |
| Spannungswert 300 % [MPa] | 0 | 21,9 |
| Reißdehnung [%] | 256 | 306 |
| Beständigkeitsmaß* | 10456 | 16703 |

| | | |
|---|---|---|
| *Die erfindungsgemäßen Vulkanisate zeigen hervorragende Werte für das Beständigkeitsmaß, welches für die maximale mechanische Energieaufnahme des Vulkanisates steht und aus der Summe der Produkte von Spannungswert und Dehnung und des Produkts aus Zugfestigkeit und Reißdehnung gebildet wird. | | |

## Patentansprüche

1. Verfahren zur Herstellung von aminomethylgruppenhaltigem ganz oder teilweise hydrierten Nitrilkautschuk mit einem Gehalt an α,β-ungesättigten Nitrilen, vorzugsweise Acrylnitril von 10 - 50 Gew.-%, vorzugsweise 18 - 48 Gew.-%, besonders bevorzugt 22 - 46 Gew.-% und ganz besonders bevorzugt 26 - 44 Gew.-% jeweils bezogen auf den aminomethylgruppenhaltigen hydrierten Nitrilkautschuk und einer Mooneyviskosität (ML 1+4/100°C) von 10 bis 150 ME, vorzugsweise 20 bis 130 ME, besonders bevorzugt 39 bis 100 ME, durch Inkontaktbringen von ganz oder teilweise hydriertem Nitrilkautschuk mit Wasserstoff in Gegenwart von Raney-Cobalt, wobei
(i) die Kontaktierung in Gegenwart von 0,01 bis 5 Gew.-%, ein oder mehrerer sulfidischer Additive, vorzugsweise ein oder mehrerer aliphatischer Sulfide, besonders bevorzugt Alkylsulfide und ganz besonders bevorzugt von Dodecylsulfid erfolgt, und/oder
(ii) das verwendete Raney-Cobalt vor dem Inkontaktbringen durch Vereinigen mit einem getrockneten Lösungsmittel und anschließender Abtrennung von Raney-Cobalt getrocknet wurde.

2. Verfahren gemäß Anspruch 1, wobei der aminomethylgruppenhaltige ganz oder teilweise hydrierte Nitrilkautschuk einen Aminomethylgruppengehalt von 0,01 bis 20 Gew.-% besonders bevorzugt von 0,1 bis 15 Gew.-%, weiter bevorzugt 0,5 bis 10 Gew.-% und ganz besonders bevorzugt 1 bis 5 Gew.-% jeweils bezogen auf den aminomethylgruppenhaltigen hydrierten Nitrilkautschuk aufweist.

3. **Aminomethylgruppenhaltiger ganz oder teilweise hydrierter Nitrilkautschuk** mit einem Gehalt an α,β-ungesättigten Nitrilen, vorzugsweise Acrylnitril von 10 - 50 Gew.-%, vorzugsweise 18 - 48 Gew.-%, besonders bevorzugt 22 - 46 Gew.-% und ganz besonders bevorzugt 26 - 44 Gew.-% jeweils bezogen auf den aminomethylgruppenhaltigen hydrierten Nitrilkautschuk und einer Mooneyviskosität (ML 1+4/100°C) von 10 bis 150 ME, vorzugsweise 20 bis 130 ME, besonders bevorzugt 39 bis 100 ME.

4. Aminomethylgruppenhaltiger ganz oder teilweise hydrierter Nitrilkautschuk gemäß Anspruch 3, welcher einen Hydrierungsgrad bezogen auf C=C Doppelbindungen von 80 bis 100, bevorzugt 90 bis 100, besonders bevorzugt 95 bis 100 aufweist.

5. Aminomethylgruppenhaltiger ganz oder teilweise hydrierter Nitrilkautschuk gemäß Anspruch 3 oder 4, welcher einen Aminomethylgruppengehalt von 0,01 bis 20 Gew.-% besonders bevorzugt von 0,1 bis 15 Gew.-%, weiter bevorzugt 0,5 bis 10 Gew.-% und ganz besonders bevorzugt 1 bis 5 Gew.-% jeweils bezogen auf den aminomethylgruppenhaltigen hydrierten Nitrilkautschuk aufweist.

6. Aminomethylgruppenhaltiger hydrierter Nitrilkautschuk nach einem der Ansprüche 3 bis 5, **dadurch gekennzeichnet, dass** eine Lösung von 50 mg aminomethylgruppenhaltigem ganz oder teilweise hydrierten Nitrilkautschuk in 2,5 ml Monochlorbenzol bei 70 °C nach Zugabe von 200 µl Ninhydrin innerhalb von 2 Minuten eine Violettfärbung zeigt.

7. **Verwendung** von ganz oder teilweise hydriertem Nitrilkautschuk zur Herstellung von aminomethylgruppenhaltigem hydrierten Nitrilkautschuk gemäß Ansprüchen 3 bis 6.

8. **Vulkanisierbare Zusammensetzung** enthaltend
(i) mindestens einen aminomethylgruppenhaltigem ganz oder teilweise hydrierten Nitrilkautschuk mit einem Gehalt an α,β-ungesättigten Nitrilen, vorzugsweise Acrylnitril von 10 - 50 Gew. %, vorzugsweise 18 - 48 Gew.-%, besonders bevorzugt 22 - 46 Gew.-% und ganz besonders bevorzugt 26 - 44 Gew.-% jeweils bezogen auf den aminomethylgruppenhaltigen hydrierten Nitrilkautschuk und einer Mooneyviskosität (ML 1+4/100°C) von 10 bis 150 ME, vorzugsweise 20 bis 130 ME, besonders bevorzugt 39 bis 100 ME, sowie
(ii) mindestens einen Vernetzer, bevorzugt mindestens einen Vernetzer enthaltend ein, zwei oder mehr Gruppen ausgewählt aus Carbonsäureanhydridgruppen, Carbonsäuregruppen und Carbonsäureestergruppen, besonders bevorzugt mindestens einen Vernetzer enthaltend ein, zwei oder mehr Carbonsäureanhydridgruppen.

9. Vulkanisierbare Zusammensetzung gemäß Anspruch 8, wobei der aminomethylgruppenhaltige ganz oder teilweise hydrierte Nitrilkautschuk einen Hydriergrad bezogen auf C=C Doppelbindungen von 80 bis 100, vorzugsweise 90 bis 100, besonders bevorzugt 95 bis 100 aufweist.

10. Vulkanisierbare Zusammensetzung gemäß einem der Ansprüche 8 oder 9, wobei der aminomethylgruppenhaltige ganz oder teilweise hydrierte Nitrilkautschuk einen Aminomethylgruppengehalt von 0,01 bis 20 Gew.-% besonders bevorzugt von 0,1 bis 15 Gew.-%, weiter bevorzugt 0,5 bis 10 Gew.-% und ganz besonders bevorzugt 1 bis 5 Gew.-% jeweils bezogen auf den aminomethylgruppenhaltigen hydrierten Nitrilkautschuk aufweist.

11. Vulkanisierbare Zusammensetzung gemäß einem der Ansprüche 8 bis 10, wobei der aminomethylgruppenhaltige ganz oder teilweise hydrierte Nitrilkautschuk einen Gelgehalt von weniger als 10 Gew.-%, vorzugsweise weniger als 5 Gew.-%, besonders bevorzugt weniger als 3 Gew.-%, ganz besonders bevorzugt weniger als 2 Gew.-% und meist bevorzugt zwischen 0,01 und 1 Gew.-% jeweils bezogen auf den aminomethylgruppenhaltigen hydrierten Nitrilkautschuk aufweist.

12. **Verfahren zur Herstellung von Vulkanisaten** wobei Zusammensetzungen gemäß einem der Ansprüche 8 bis 11 auf eine Temperatur im Bereich von im Bereich von 100 bis 250 °C, vorzugsweise 130 bis 220 °C besonders bevorzugt 150 bis 200°C erwärmt werden.

13. **Vulkanisate** erhältlich durch das Verfahren gemäß Anspruch 12.

14. **Formkörper** enthaltend ein Vulkanisat gemäß Anspruch 13.

15. **Verwendung** von ganz oder teilweise hydriertem Nitrilkautschuk, der Wiederholungseinheiten abgeleitet von mindestens einem konjugierten Dien, mindestens einem α,β-ungesättigten Nitril und gegebenenfalls einem oder mehreren weiteren copolymerisierbaren Monomeren enthält und Aminomethylgruppen aufweist **zur Herstellung von vulkanisierbaren Zusammensetzungen,** vorzugsweise Zusammensetzungen gemäß einem der Ansprüche 8 bis 11, **von Vulkanisaten,** vorzugsweise Vulkanisaten gemäß Anspruch 13 oder **von Formkörpern**, vorzugsweise Formkörpern gemäß Anspruch 14.

## Claims

1. **Process for the production** of fully or partially hydrogenated nitrile rubber containing aminomethyl groups and having from 10 - 50% by weight, preferably from 18 - 48% by weight, particularly preferably from 22 - 46% by weight and very particularly preferably from 26 - 44% by weight, content of α,β-unsaturated nitriles, preferably acrylonitrile, based in each case on the hydrogenated nitrile rubber containing aminomethyl groups, and with Mooney viscosity (ML 1+4/100°C) from 10 to 150 MU, preferably from 20 to 130 MU, particularly preferably from 39 to 100 MU, by bringing fully or partially hydrogenated nitrile rubber into contact with hydrogen in the presence of Raney cobalt, where
(i) the contact takes place in the presence of from 0.01 to 5% by weight of one or more sulphidic additives, preferably one or more aliphatic sulphides, particularly preferably alkyl sulphides, and very particularly preferably dodecyl sulphide, and/or
(ii) prior to the contact, the Raney cobalt used has been dried via a combination with a dried solvent followed by isolation of Raney cobalt.

2. Process according to Claim 1, where the aminomethyl group content of the fully or partially hydrogenated nitrile rubber containing aminomethyl groups is from 0.01 to 20% by weight, particularly preferably from 0.1 to 15% by weight, more preferably from 0.5 to 10% by weight, and very particularly preferably from 1 to 5% by weight, based in each case on the hydrogenated nitrile rubber containing aminomethyl groups.

3. **Fully or partially hydrogenated nitrile rubber containing aminomethyl groups** and having from 10 - 50% by weight, preferably from 18 - 48% by weight, particularly preferably from 22 - 46% by weight and very particularly preferably from 26 - 44% by weight, content of α,β-unsaturated nitriles, preferably acrylonitrile, based in each case on the hydrogenated nitrile rubber containing aminomethyl groups, and with Mooney viscosity (ML 1+4/100°C) from 10 to 150 MU, preferably from 20 to 130 MU, particularly preferably from 39 to 100 MU.

4. Fully or partially hydrogenated nitrile rubber containing aminomethyl groups according to Claim 3, where the degree of hydrogenation of said rubber, based on C=C double bonds, is from 80 to 100, preferably from 90 to 100, particularly preferably from 95 to 100.

5. Fully or partially hydrogenated nitrile rubber containing aminomethyl groups according to Claim 3 or 4, where the aminomethyl group content of said rubber is from 0.01 to 20% by weight, particularly preferably from 0.1 to 15% by weight, more preferably from 0.5 to 10% by weight, very particularly preferably from 1 to 5% by weight, based in each case on the hydrogenated nitrile rubber containing aminomethyl groups.

6. Hydrogenated nitrile rubber containing aminomethyl groups according to any of Claims 3 to 5, **characterized in that** a solution of 50 mg of fully or partially hydrogenated nitrile rubber containing aminomethyl groups in 2.5 ml of monochlorobenzene exhibits a violet colouration within 2 minutes after addition of 200 µl of ninhydrin at 70°C.

7. **Use** of fully or partially hydrogenated nitrile rubber for the production of hydrogenated nitrile rubber containing aminomethyl groups according to Claims 3 to 6.

8. **Vulcanisable composition** comprising
(i) at least one fully or partially hydrogenated nitrile rubber containing aminomethyl groups and having from 10 - 50% by weight, preferably from 18 - 48% by weight, particularly preferably from 22 - 46% by weight and very particularly preferably from 26 - 44% by weight, content of α,β-unsaturated nitriles, preferably acrylonitrile, based in each case on the hydrogenated nitrile rubber containing aminomethyl groups, and with Mooney viscosity (ML 1+4/100°C) from 10 to 150 MU, preferably from 20 to 130 MU, particularly preferably from 39 to 100 MU, and also
(ii) at least one crosslinking agent, preferably at least one crosslinking agent containing one, two or more groups selected from carboxylic anhydride groups, carboxylic acid groups and carboxylic ester groups, particularly preferably at least one crosslinking agent containing one, two or more carboxylic anhydride groups.

9. Vulcanisable composition according to Claim 8, where the degree of hydrogenation of the fully or partially hydrogenated nitrile rubber containing aminomethyl groups, based on C=C double bonds, is from 80 to 100, preferably from 90 to 100, particularly preferably from 95 to 100.

10. Vulcanisable composition according to either of Claims 8 and 9, where the aminomethyl group content of the fully or partially hydrogenated nitrile rubber containing aminomethyl groups is from 0.01 to 20% by weight, particularly preferably from 0.1 to 15% by weight, more preferably from 0.5 to 10% by weight, and very particularly preferably from 1 to 5% by weight, based in each case on the hydrogenated nitrile rubber containing aminomethyl groups.

11. Vulcanisable composition according to any of Claims 8 to 10, where the gel content of the fully or partially hydrogenated nitrile rubber containing aminomethyl groups is less than 10% by weight, preferably less than 5% by weight, particularly preferably less than 3% by weight, very particularly preferably less than 2% by weight, and most preferably from 0.01 to 1% by weight, based in each case on the hydrogenated nitrile rubber containing aminomethyl groups.

12. **Process for the production of vulcanisates,** where compositions according to any of Claims 8 to 11 are heated to a temperature in the range in the range from 100 to 250°C, preferably from 130 to 220°C, particularly preferably from 150 to 200°C.

13. **Vulcanisate** obtainable via the process according to Claim 12.

14. **Mouldings** comprising a vulcanisate according to Claim 13.

15. **Use** of fully or partially hydrogenated nitrile rubber which comprises repeating units derived from at least one conjugated diene, from at least one α,β-unsaturated nitrile, and optionally from one or more other copolymerisable monomers, and has aminomethyl groups **for the production of vulcanisable compositions,** preferably compositions according to any of Claims 8 to 11, **of vulcanisates,** preferably vulcanisates according to Claim 13, or **of mouldings,** preferably mouldings according to Claim 14.

## Revendications

1. Procédé de fabrication d'un caoutchouc de nitrile hydrogéné en totalité ou en partie, contenant des groupes aminométhyle, ayant une teneur en nitriles α,β-insaturés, de préférence en acrylonitrile, de 10 à 50 % en poids, de préférence de 18 à 48 % en poids, de manière particulièrement préférée de 22 à 46 % en poids et de manière tout particulièrement préférée de 26 à 44 % en poids, à chaque fois par rapport au caoutchouc de nitrile hydrogéné contenant des groupes aminométhyle, et une viscosité de Mooney (ML 1+4/100 °C) de 10 à 150 ME, de préférence de 20 à 130 ME, de manière particulièrement préférée de 39 à 100 ME, par mise en contact d'un caoutchouc de nitrile hydrogéné en totalité ou en partie avec de l'hydrogène en présence de cobalt de Raney,
(i) la mise en contact ayant lieu en présence de 0,01 à 5 % en poids d'un ou de plusieurs additifs sulfuriques, de préférence d'un ou de plusieurs sulfures aliphatiques, de manière particulièrement préférée de sulfures d'alkyle, et de manière tout particulièrement préférée de sulfure de dodécyle, et/ou
(ii) le cobalt de Raney utilisé ayant été séché avant la mise en contact par combinaison avec un solvant sec, puis séparation du cobalt de Raney.

2. Procédé selon la revendication 1, dans lequel le caoutchouc de nitrile hydrogéné en totalité ou en partie contenant des groupes aminométhyle présente une teneur en groupes aminométhyle de 0,01 à 20 % en poids, de manière particulièrement préférée de 0,1 à 15 % en poids, de manière davantage préférée de 0,5 à 10 % en poids et de manière tout particulièrement préférée de 1 à 5 % en poids, à chaque fois par rapport au caoutchouc de nitrile hydrogéné contenant des groupes aminométhyle.

3. Caoutchouc de nitrile hydrogéné en totalité ou en partie contenant des groupes aminométhyle, ayant une teneur en nitriles α,β-insaturés, de préférence en acrylonitrile, de 10 à 50 % en poids, de préférence de 18 à 48 % en poids, de manière particulièrement préférée de 22 à 46 % en poids et de manière tout particulièrement préférée de 26 à 44 % en poids, à chaque fois par rapport au caoutchouc de nitrile hydrogéné contenant des groupes aminométhyle, et une viscosité de Mooney (ML 1+4/100 °C) de 10 à 150 ME, de préférence de 20 à 130 ME, de manière particulièrement préférée de 39 à 100 ME.

4. Caoutchouc de nitrile hydrogéné en totalité ou en partie contenant des groupes aminométhyle selon la revendication 3, qui présente un degré d'hydrogénation relatif aux doubles liaisons C=C de 80 à 100, de préférence de 90 à 100, de manière particulièrement préférée de 95 à 100.

5. Caoutchouc de nitrile hydrogéné en totalité ou en partie contenant des groupes aminométhyle selon la revendication 3 ou 4, qui présente une teneur en groupes aminométhyle de 0,01 à 20 % en poids, de manière particulièrement préférée de 0,1 à 15 % en poids, de manière davantage préférée de 0,5 à 10 % en poids et de manière tout particulièrement préférée de 1 à 5 % en poids, à chaque fois par rapport au caoutchouc de nitrile hydrogéné contenant des groupes aminométhyle.

6. Caoutchouc de nitrile hydrogéné contenant des groupes aminométhyle selon l'une quelconque des revendications 3 à 5, **caractérisé en ce qu'**une solution de 50 mg de caoutchouc de nitrile hydrogéné en totalité ou en partie contenant des groupes aminométhyle dans 2,5 ml de monochlorobenzène à 70 °C présente en 2 minutes après l'ajout de 200 µl de ninhydrine une coloration violette.

7. Utilisation d'un caoutchouc de nitrile hydrogéné en totalité ou en partie pour la fabrication d'un caoutchouc de nitrile hydrogéné contenant des groupes aminométhyle selon les revendications 3 à 6.

8. Composition vulcanisable, contenant :
(i) au moins un caoutchouc de nitrile hydrogéné en totalité ou en partie contenant des groupes aminométhyle, ayant une teneur en nitriles α,β-insaturés, de préférence en acrylonitrile, de 10 à 50 % en poids, de préférence de 18 à 48 % en poids, de manière particulièrement préférée de 22 à 46 % en poids et de manière tout particulièrement préférée de 26 à 44 % en poids, à chaque fois par rapport au caoutchouc de nitrile hydrogéné contenant des groupes aminométhyle, et une viscosité de Mooney (ML 1+4/100 °C) de 10 à 150 ME, de préférence de 20 à 130 ME, de manière particulièrement préférée de 39 à 100 ME, ainsi que
(ii) au moins un agent de réticulation, de préférence au moins un agent de réticulation contenant un, deux ou davantage de groupes choisis parmi les groupes anhydride d'acide carboxylique, les groupes acide carboxylique et les groupes ester d'acide carboxylique, de manière particulièrement préférée au moins un agent de réticulation contenant un, deux ou davantage de groupes anhydride d'acide carboxylique.

9. Composition vulcanisable selon la revendication 8, dans laquelle le caoutchouc de nitrile hydrogéné en totalité ou en partie contenant des groupes aminométhyle présente un degré d'hydrogénation relatif aux doubles liaisons C=C de 80 à 100, de préférence de 90 à 100, de manière particulièrement préférée de 95 à 100.

10. Composition vulcanisable selon l'une quelconque des revendications 8 ou 9, dans laquelle le caoutchouc de nitrile hydrogéné en totalité ou en partie contenant des groupes aminométhyle présente une teneur en groupes aminométhyle de 0,01 à 20 % en poids, de manière particulièrement préférée de 0,1 à 15 % en poids, de manière davantage préférée de 0,5 à 10 % en poids et de manière tout particulièrement préférée de 1 à 5 % en poids, à chaque fois par rapport au caoutchouc de nitrile hydrogéné contenant des groupes aminométhyle.

11. Composition vulcanisable selon l'une quelconque des revendications 8 à 10, dans laquelle le caoutchouc de nitrile hydrogéné en totalité ou en partie contenant des groupes aminométhyle présente une teneur en gel de moins de 10 % en poids, de préférence de moins de 5 % en poids, de manière particulièrement préférée de moins de 3 % en poids, de manière tout particulièrement préférée de moins de 2 % en poids et de manière préférée entre toutes comprise entre 0,01 et 1 % en poids, à chaque fois par rapport au caoutchouc de nitrile hydrogéné contenant des groupes aminométhyle.

12. Procédé de fabrication de vulcanisats, selon lequel des compositions selon l'une quelconque des revendications 8 à 11 sont portées à une température dans la plage allant dans la plage allant de 100 à 250 °C, de préférence de 130 à 220 °C, de manière particulièrement préférée de 150 à 200 °C.

13. Vulcanisats, pouvant être obtenus par le procédé selon la revendication 12.

14. Corps moulé, contenant un vulcanisat selon la revendication 13.

15. Utilisation d'un caoutchouc de nitrile hydrogéné en totalité ou en partie, qui contient des unités de répétition dérivées d'au moins un diène conjugué, d'au moins un nitrile α,β-insaturé et éventuellement d'un ou de plusieurs autres monomères copolymérisables, et comprend des groupes aminométhyle, pour la fabrication de compositions vulcanisables, de préférence de compositions selon l'une quelconque des revendications 8 à 11, de vulcanisats, de préférence de vulcanisats selon la revendication 13, ou de corps moulés, de préférence de corps moulés selon la revendication 14.
